(19) **Europäisches Patentamt / European Patent Office / Office européen des brevets**

(11) **EP 4 683 327 A1**

(12) **EUROPEAN PATENT APPLICATION**
published in accordance with Art. 153(4) EPC

(43) Date of publication:
**21.01.2026 Bulletin 2026/04**

(21) Application number: **24771200.3**

(22) Date of filing: **13.03.2024**

(51) International Patent Classification (IPC):
**H04N 19/573** (2014.01)　　**H04N 19/119** (2014.01)
**H04N 19/105** (2014.01)　　**H04N 19/132** (2014.01)

(52) Cooperative Patent Classification (CPC):
**H04N 19/105; H04N 19/119; H04N 19/132; H04N 19/573**

(86) International application number:
**PCT/KR2024/003245**

(87) International publication number:
**WO 2024/191201 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.03.2023 KR 20230032325**

(71) Applicant: **LG Electronics Inc.**
**Yeongdeungpo-gu**
**Seoul 07336 (KR)**

(72) Inventors:
• **NAM, Jung Hak**
  **Seoul 06772 (KR)**
• **PARK, Nae Ri**
  **Seoul 06772 (KR)**
• **LIM, Jaehyun**
  **Seoul 06772 (KR)**
• **JANG, Hyeong Moon**
  **Seoul 06772 (KR)**
• **AHN, Yongjo**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **IMAGE ENCODING/DECODING METHOD, METHOD FOR TRANSMITTING BITSTREAM, AND RECORDING MEDIUM HAVING BITSTREAM STORED THEREIN**

(57)　Provided are an image encoding/decoding method, a bitstream transmission method, and a computer-readable recording medium storing a bitstream. The image decoding method performed by an image decoding apparatus, according to the present disclosure, comprises the steps of: acquiring at least one piece of motion information regarding the current block to which a geometry partitioning mode (GPM) is applied; on the basis of a neighboring region of at least one reference block indicated by the motion information and a neighboring region of the current block, deriving compensation information related to compensation of the reference block; and generating prediction blocks of the current block on the basis of the compensation information.

FIG. 20

```
          Start
            │
  ┌─────────────────────────┐
  │ Obtain motion information │──── S2010
  └─────────────────────────┘
            │
  ┌────────────────────────────┐
  │ Derive compensation information │──── S2020
  └────────────────────────────┘
            │
  ┌──────────────────────────┐
  │ Generate prediction samples │──── S2030
  └──────────────────────────┘
            │
           End
```

EP 4 683 327 A1

**Description**

[Technical Field]

The present disclosure relates to a method for encoding/decoding an image, a method for transmitting a bitstream and a recording medium for storing a bitstream, and more specifically, relates to a method for compensating a reference block used for a geometry partitioning mode.

[Background Art]

Recently, the demand for high-resolution and high-quality images, such as High Definition (HD) images and Ultra High Definition (UHD) images, has been increasing in various fields. As image data becomes high-resolution and high-quality, the amount of transmitted information or bit rate increases relative to conventional image data. The increase in transmitted information or bit rate amount leads to an increase in transmission costs and storage costs.

Accordingly, a high-efficiency image compression technology is required to effectively transmit, store, and reproduce the information of high-resolution and high-quality images.

[Disclosure]

[Technical Problem]

The present disclosure is to provide an image encoding/decoding method and apparatus with improved encoding/decoding efficiency.

In addition, the present disclosure is to provide a method for performing a geometry partitioning mode by applying compensation.

In addition, the present disclosure is to provide a method for deriving compensation information used for compensation.

In addition, the present disclosure is to provide a method for deriving compensation information based on the partitioning direction and/or partitioning offset of a geometry partitioning mode.

In addition, the present disclosure is to provide a method for signaling information on whether compensation is applied.

In addition, the present disclosure is to provide a non-transitory computer-readable recording medium for storing a bitstream generated by an image encoding method according to the present disclosure.

In addition, the present disclosure is to provide a non-transitory computer-readable recording medium for storing a bitstream which is received and decoded by the image decoding apparatus according to the present disclosure and used for image reconstruction.

In addition, the present disclosure is to provide a method for transmitting a bitstream generated by an image encoding method according to the present disclosure.

The technical problems to be achieved in the present disclosure are not limited to the technical problems described above, and other technical problems not described may be clearly understood by those of ordinary skill in the art from the following descriptions.

[Technical Solution]

An image decoding method according to an aspect of the present disclosure is an image decoding method performed by an image decoding apparatus, which may be an image decoding method including obtaining at least one motion information for a current block to which a geometry partitioning mode (GPM) is applied; based on a neighboring area of at least one reference block represented by the motion information and a neighboring area of the current block, deriving compensation information related to compensation of the reference block; and based on the compensation information, generating prediction samples of the current block.

An image encoding method according to another aspect of the present disclosure is an image encoding method performed by an image encoding apparatus, which may be an image encoding method including determining at least one reference block for prediction of a current block to which a geometry partitioning mode (GPM) is applied; based on a neighboring area of the reference block and a neighboring area of the current block, deriving compensation information related to compensation of the reference block; and based on the compensation information, generating prediction samples of the current block.

A computer-readable recording medium according to another aspect of the present disclosure may store a bitstream generated by the image encoding method or apparatus of the present disclosure.

A transmission method according to another aspect of the present disclosure may transmit a bitstream generated by the image encoding method or apparatus of the present disclosure.

The features briefly summarized above for the present disclosure are merely an exemplary aspect of a detailed description of the present disclosure described below, and do not limit the scope of the present disclosure.

[Advantageous Effects]

According to the present disclosure, an image encoding/decoding method and apparatus with improved encoding/decoding efficiency may be provided.

In addition, according to the present disclosure, prediction accuracy may be improved through compensation for a reference block.

In addition, according to the present disclosure, efficiency for residual signal signaling may be improved by improving prediction accuracy through compensation.

In addition, according to the present disclosure, a non-transitory computer-readable recording medium for storing a bitstream generated by an image encoding method according to the present disclosure may be provided.

According to the present disclosure, a non-transitory computer-readable recording medium for storing a bitstream which is received and decoded by the image decoding apparatus according to the present disclosure and used for image reconstruction may be provided.

In addition, according to the present disclosure, a method for transmitting a bitstream generated by an image encoding method may be provided.

The effects obtainable from the present disclosure are not limited to the effects described above, and other effects not described may be clearly understood by those of ordinary skill in the art from the following descriptions.

[Brief Description of Drawings]

FIG. 1 shows a schematic diagram of a video coding system to which an embodiment according to the present disclosure may be applied.

FIG. 2 shows a schematic diagram of an image encoding apparatus to which an embodiment according to the present disclosure may be applied.

FIG. 3 shows a schematic diagram of an image decoding apparatus to which an embodiment according to the present disclosure may be applied.

FIG. 4 is a diagram schematically representing an inter predictor of an image encoding apparatus.

FIG. 5 is a flowchart representing a method for encoding an image based on inter prediction.

FIG. 6 is a diagram schematically representing an inter predictor of an image decoding apparatus.

FIG. 7 is a flowchart representing a method for decoding an image based on inter prediction.

FIG. 8 is a flowchart representing an inter prediction method.

FIG. 9 is a diagram representing partitioning examples of a geometry partitioning mode.

FIG. 10 is a diagram for describing the candidate list of a geometry partitioning mode.

FIG. 11 is a diagram for describing the example of a method for generating the blending weight of a geometry partitioning mode.

FIG. 12 is a diagram for describing the example of the neighboring area of a current block and the neighboring area of a reference block.

FIG. 13 is a diagram for describing examples for the partitioning direction of a geometry partitioning mode.

FIG. 14 is a diagram for describing examples of lower blocks according to the partitioning direction of a geometry partitioning mode.

FIGS. 15 to 18 are a diagram for describing examples for a reference area according to a partitioning direction and/or a partitioning offset.

FIG. 19 is a flowchart representing an image encoding method according to an embodiment of the present disclosure.

FIG. 20 is a flowchart representing an image decoding method according to an embodiment of the present disclosure.

FIG. 21 is a flowchart representing an image encoding/decoding method according to other embodiment of the present disclosure.

FIG. 22 is a flowchart representing an image encoding/decoding method according to another embodiment of the present disclosure.

FIG. 23 is a flowchart representing an image encoding/decoding method according to another embodiment of the present disclosure.

FIG. 24 is a flowchart representing an image encoding/decoding method according to another embodiment of the present disclosure.

FIG. 25 is a flowchart representing an image encoding method according to another embodiment of the present disclosure.

FIG. 26 is a flowchart representing an image decoding method according to another embodiment of the present disclosure.

FIG. 27 shows an exemplary diagram of a content streaming system to which an embodiment of the present disclosure may be applied.

[Mode for Invention]

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar reference numerals have been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

In the present disclosure, "picture" generally refers to a unit representing a single image at a specific point in time. A slice/tile is an encoding unit that constitutes a part of a picture, and a picture may be composed of one or more slices/tiles. Additionally, a slice/tile may include one or more coding tree units (CTUs).

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In the present disclosure, "unit" may refer to a basic unit of image processing. A unit may include at least one of a specific area of a picture or information related to the area. Depending on the context, the term "unit" may be used interchangeably with "sample array," "block," "area," etc. In general, an $M \times N$ block may include a set (or array) of samples (or a sample array) or a set (or array) of transform coefficients, consisting of M columns and N rows.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In the present disclosure, unless explicitly stated as a chroma block, the term "current block" may refer to a block that includes both a luma component block and a chroma component block or may refer to "the luma block of the current block". The luma component block of the current block may be explicitly expressed with terms such as "luma block" or "current luma block", clearly indicating it as a luma component block. Additionally, the chroma component block of the current block may be explicitly expressed with terms such as "chroma block" or "current chroma block", clearly indicating it as a chroma component block.

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

## Overview of the video coding system

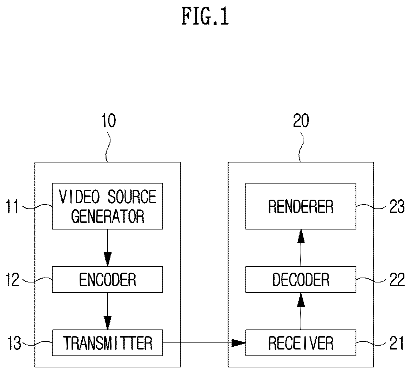

FIG. 1 shows a schematic diagram of a video coding system to which an embodiment according to the present disclosure may be applied.

A video coding system according to an embodiment may include an encoder apparatus 10 and a decoder apparatus 20. The encoder apparatus 10 may transmit encoded video and/or image information or data to the decoder apparatus 20 through a digital storage medium or network in the form of a file or streaming.

An encoder apparatus 10 according to an embodiment may include a video source generator 11, an encoder 12, and a transmitter 13. A decoder apparatus 20 according to an embodiment may include a receiver 21, a decoder 22, and a renderer 23. The encoder 12 may be referred to as a video/image encoder, and the decoder 22 may be referred to as a video/image decoder. The transmitter 13 may be included in the encoder 12. The receiver 21 may be included in the decoder 22. The renderer 23 may include a display, and the display may be configured as a separate device or external component.

The video source generator 11 may obtain a video/an image through a process of capturing, synthesizing, or generating a video/an image. The video source generator 11 may include a video/an image capture device and/or a video/an image generation device. The video/image capture device may include, for example, one or more cameras, a video/an image archive containing previously captured video/image, etc. The video/image generation device includes, for example, a computer, tablet, or smartphone, and may (electronically) generate a video/an image. For example, virtual video/image may be generated through a computer, etc., and in this case, the video/image capturing process may be replaced by the process of generating related data.

The encoder 12 may encode the input video/image. The encoder 12 may perform a series of procedures such as prediction, transform, quantization, etc. for compression and encoding efficiency. The encoder 12 may output the encoded data (encoded video/image information) in the form of a bitstream.

The transmitter 13 may obtain the encoded video/image information or data output in the form of a bitstream and transmit it to the receiver 21 of the decoder apparatus 20 or another external object through a digital storage medium or network, in the form of a file or streaming. The digital storage medium may include various storage media such as USB, SD, CD, DVD, Blu-ray, HDD, SSD, etc. The transmitter 13 may include an element for generating media files through a predetermined file format and element for transmission over broadcast/communication networks. The transmitter 13 may be provided as a separate transmission apparatus from the encoding apparatus 12, in which case the transmission apparatus may include at least one processor for obtaining the encoded video/image information or data in bitstream form and a transmitter for delivering it in the form of file or streaming. The receiver 21 may extract/receive the bitstream from the storage medium or network and transmit it to decoder 22.

The decoder 22 may decode the video/image by performing a series of procedures such as dequantization, inverse transform, prediction, etc. corresponding to the operations of the encoder 12.

The renderer 23 may render the decoded video/image. The rendered video/image may be displayed through the display unit.

## Overview of the image encoding apparatus

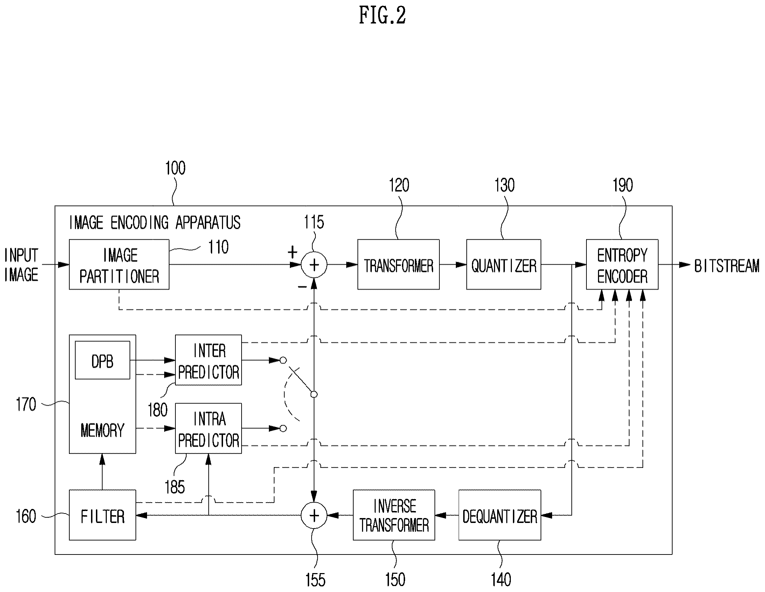

FIG. 2 shows a schematic diagram of an image encoding apparatus to which an embodiment according to the present disclosure may be applied.

As described in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter predictor 180, an intra predictor 185, and an entropy encoder 190. The inter predictor 180 and the intra predictor 185 may collectively be referred to as a "predictor." The transformer 120, the quantizer 130, the dequantizer 140, and the inverse transformer 150 may be included in a residual processor. The residual processor may further include the subtractor 115.

All or at least some of the multiple components constituting the image encoding apparatus 100 may be implemented as a single hardware component (i.e., an encoder or a processor), depending on the embodiment.

Additionally, the memory 170 may include a decoded picture buffer (DPB) and may be implemented by a digital storage medium.

The image partitioner 110 may partition the input image (or picture, frame) input to the image encoding apparatus 100 into at least one processing unit. As an example, the processing unit may be referred to as a coding unit (CU). A coding unit may be obtained by recursively partitioning a coding tree unit (CTU) or a largest coding unit (LCU) according to a quad-tree, binary-tree, or ternary-tree (QT/BT/TT) structure. For example, a coding unit may be divided into a deeper-depth coding unit based on a quad-tree structure, a binary-tree structure, and/or a ternary-tree structure. For partitioning a coding unit, the quad-tree structure may be applied first, followed by the binary-tree structure and/or the ternary-tree structure. The coding procedure according to the present disclosure may be performed based on the final coding unit, which is not further partitioned. The largest coding unit may be used directly as the final coding unit, or a deeper-depth coding unit obtained by partitioning the largest coding unit may be used as the final coding unit. Here, the coding procedure may include a procedure such as prediction, transform, and/or reconstruction, which will be described later. As another example, the processing unit for the coding procedure may be a prediction unit (PU) or a transform unit (TU). The prediction unit and the transform unit may each be divided or partitioned from the final coding unit. The prediction unit may be a unit for sample prediction, and the transform unit may be a unit for deriving a transform coefficient and/or deriving a residual signal from a transform coefficient.

The predictor (inter predictor 180 or intra predictor 185) may perform prediction for a target block (current block) and generate a predicted block that includes prediction samples for the current block. The predictor may determine whether intra prediction or inter prediction is applied to the current block or coding unit (CU). The predictor may generate various information related to the prediction of the current block and transmit it to the entropy encoder 190. The prediction-related information may be encoded by the entropy encoder 190 and may be output in the form of a bitstream.

The intra predictor 185 may predict the current block by referring to samples within the current picture. The referenced samples may be located in the neighboring area of the current block or may be located farther away, depending on the intra prediction mode and/or intra prediction method. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes, depending on the granularity of the prediction direction. However, this is an example, and a greater or fewer number of directional prediction modes may be used depending on the configuration. The intra predictor 185 may also determine the prediction mode applied to the current block by using the prediction mode applied to neighboring block.

The inter predictor 180 may derive a predicted block for the current block based on a reference block (reference sample array) specified by a motion vector on a reference picture. To reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e. L0 prediction, L1 prediction, Bi prediction, etc.). In inter prediction, neighboring block may include spatial neighboring block present within the current picture and temporal neighboring block present in the reference picture. The reference picture containing the reference block and the reference picture containing the temporal neighboring block may be the same or different. The temporal neighboring block may be referred to as a collocated reference block or a collocated coding unit (colCU). The reference picture containing the temporal neighboring block may be referred to as a collocated picture (colPic). For example, the inter predictor 180 may construct a motion information candidate list based on neighboring blocks and generate information indicating which candidate is used to derive the motion vector and/or reference picture index of the current block. Inter prediction may be performed based on various prediction modes, and for example, in the skip mode and merge mode, the inter predictor 180 may use the motion information of neighboring block as the motion information of the current block. In skip mode, unlike merge mode, residual signal may not be transmitted. In the motion vector prediction (MVP) mode, the motion vector of a neighboring block may be used as a motion vector predictor, and the motion vector of the current block may be signaled by encoding the motion vector difference and an indicator for the motion vector predictor. The motion vector difference may refer to the difference between the motion vector of the current block and the motion vector predictor.

The predictor may generate a prediction signal based on various prediction methods and/or prediction techniques described later. For example, the predictor may apply intra prediction or inter prediction for the prediction of the current block, and it may also apply both intra prediction and inter prediction simultaneously. The prediction method that applies intra prediction and inter prediction simultaneously for the prediction of the current block may be referred to as combined inter and intra prediction (CIIP). Additionally, the predictor may perform intra block copy (IBC) for the prediction of the current block. Intra block copy may be used, for example, for screen content coding (SCC), etc. in applications such as game content image/video coding. IBC is a method of predicting the current block by using a pre-reconstructed reference block within the current picture, located at a predetermined distance from the current block. When IBC is applied, the position of the reference block within the current picture may be encoded as a vector (block vector) corresponding to the predetermined distance. IBC basically performs prediction within the current picture, but since it derives a reference block within the current picture, it may operate similarly to inter prediction. In other words, IBC may use at least one of the inter prediction methods described in the present disclosure.

The prediction signal generated by the predictor may be used to generate a reconstructed signal or to generate a residual signal. The subtractor 115 may generate a residual signal (residual block, residual sample array) by subtracting the prediction signal (predicted block, predicted sample array) output from the predictor from the input image signal (original block, original sample array). The generated residual signal may be transmitted to the transformer 120.

The transformer 120 may generate transform coefficients by applying a transform method to the residual signal. For example, the transform method may include at least one of Discrete Cosine Transform (DCT), Discrete Sine Transform (DST), Karhunen-Loeve Transform (KLT), Graph-Based Transform (GBT), or Conditionally Non-linear Transform (CNT). Here, GBT refers to a transform obtained from a graph when the relationship information between pixels is represented as a graph. CNT refers to a transform obtained based on a prediction signal generated by using all previously reconstructed pixels. The transform process may be applied to a pixel block of the same square size or to a non-square variable-sized block.

The quantizer 130 may quantize the transform coefficients and transmit them to the entropy encoder 190. The entropy encoder 190 may encode the quantized signal (information on the quantized transform coefficients) and output it as a bitstream. The information on the quantized transform coefficients may be referred to as residual information. The quantizer 130 may rearrange the block-shaped quantized transform coefficients into a one-dimensional vector based on a coefficient scan order and may generate the information on the quantized transform coefficients based on the one-dimensional vector of quantized transform coefficients.

The entropy encoder 190 may perform various encoding methods, such as exponential Golomb, context-adaptive variable length coding (CAVLC), or context-adaptive binary arithmetic coding (CABAC). The entropy encoder 190 may encode not only the quantized transform coefficients but also information necessary for video/image reconstruction (i.e., values of syntax elements) either together or separately with the quantized transform coefficients. The encoded information (i.e., encoded video/image information) may be transmitted or stored in the form of a bitstream in network abstraction layer (NAL) unit. The video/image information may further include information on various parameter sets, such as an adaptation parameter set (APS), a picture parameter set (PPS), a sequence parameter set (SPS), or a video parameter set (VPS). Additionally, the video/image information may further include general constraint information. The signaling information, transmitted information, and/or syntax elements described in the present disclosure may be included in the bitstream by being encoded through the above-described encoding process.

The bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc. A transmitter (not shown) for transmitting the signal output from the entropy encoder 190 and/or a storage unit (not shown) for storing the signal may be provided as an internal/external element of the image encoding apparatus 100, or the transmitter may be configured as a component of the entropy encoder 190.

The quantized transform coefficients output from the quantizer 130 may be used to generate a residual signal. For example, a residual signal (residual block or residual samples) may be reconstructed by applying dequantization and inverse transform to the quantized transform coefficients through the dequantizer 140 and the inverse transformer 150.

The adder 155 may generate a reconstructed signal (reconstructed picture, reconstructed block, or reconstructed sample array) by adding the reconstructed residual signal to the prediction signal output from the inter predictor 180 or the intra predictor 185. When there is no residual for the target block, such as when the skip mode is applied, the predicted block may be used as the reconstructed block. The adder 155 may be referred to as a reconstructor or a reconstructed block generator. The generated reconstructed signal may be used for intra prediction of the next target block within the current picture and, as described later, may also be used for inter prediction of the next picture after undergoing filtering.

The filter 160 may apply filtering to the reconstructed signal to enhance subjective/objective quality. For example, the filter 160 may apply various filtering methods to the reconstructed picture to generate a modified reconstructed picture, and the modified reconstructed picture may be stored in the memory 170, specifically in the DPB of the memory 170. The various filtering methods may include, for example, deblocking filtering, sample adaptive offset, adaptive loop filter, bilateral filter, etc. The filter 160 may generate various filtering-related information, as described later in the explanations of each filtering method, and may transmit it to the entropy encoder 190. The filtering-related information may be encoded by the entropy encoder 190 and output in the form of a bitstream.

The modified reconstructed picture transmitted to the memory 170 may be used as a reference picture in the inter predictor 180. When inter prediction is applied in this case, the image encoding apparatus 100 may avoid prediction mismatches between the image encoding apparatus 100 and the image decoding apparatus, and may improve encoding efficiency.

The DPB in the memory 170 may store the modified reconstructed picture for use as a reference picture in the inter predictor 180. The memory 170 may store the motion information of a block in the current picture where motion information has been derived (or encoded) and/or the motion information of blocks in already reconstructed pictures. The stored motion information may be transmitted to the inter predictor 180 for use as motion information of spatial neighboring block or temporal neighboring block. The memory 170 may store the reconstructed samples of reconstructed blocks in the current picture and transmit them to the intra predictor 185.

## Overview of the image decoding apparatus

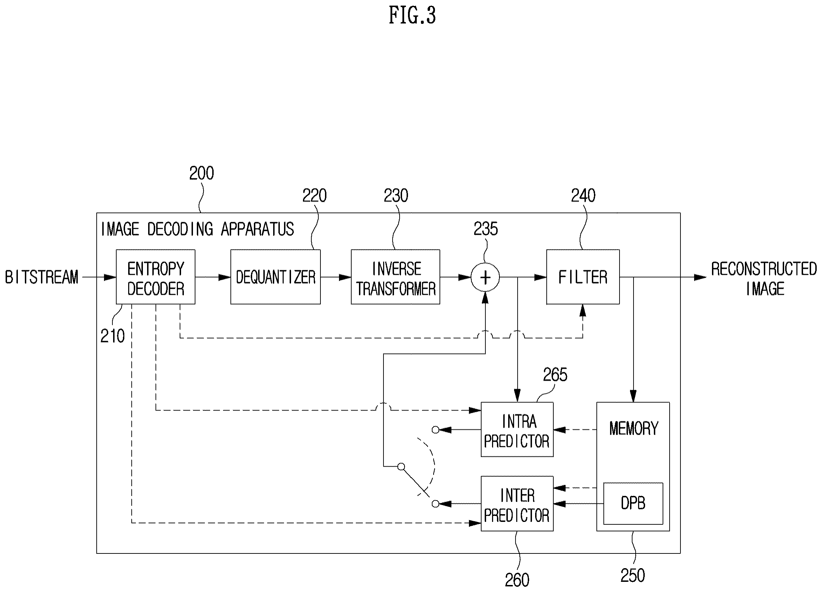

FIG. 3 shows a schematic diagram of an image decoding apparatus to which an embodiment according to the present disclosure may be applied.

As shown in FIG. 3, the image decoding apparatus 200 may include an entropy decoder 210, a dequantizer 220, an inverse transformer 230, an adder 235, a filter 240, a memory 250, an inter predictor 260, and an intra predictor 265. The inter predictor 260 and the intra predictor 265 may collectively be referred to as a "predictor". The dequantizer 220 and the inverse transformer 230 may be included in a residual processor.

All or at least some of the multiple components constituting the image decoding apparatus 200 may be implemented as a single hardware component (i.e., a decoder or a processor), depending on the embodiment. Additionally, the memory 170 may include a DPB and may be implemented by a digital storage medium.

The image decoding apparatus 200, which receives a bitstream containing video/image information, may perform a process corresponding to the process performed by the image encoding apparatus 100 in FIG. 2 to reconstruct the image. For example, the image decoding apparatus 200 may perform decoding using the processing unit applied in the image encoding apparatus. Therefore, the processing unit for decoding may be, for example, a coding unit. The coding unit may be a coding tree unit or may be obtained by splitting a largest coding unit. Additionally, the reconstructed image signal decoded and output through the image decoding apparatus 200 may be played back through a playback device (not shown).

The image decoding apparatus 200 may receive a signal output from the image encoding apparatus in FIG. 2 in the form of a bitstream. The received signal may be decoded through the entropy decoder 210. For example, the entropy decoder 210 may parse the bitstream to extract the information necessary for image reconstruction (or picture reconstruction) (i.e., video/image information). The video/image information may further include information on various parameter sets, such as an adaptation parameter set (APS), a picture parameter set (PPS), a sequence parameter set (SPS), or a video parameter set (VPS). Additionally, the video/image information may further include general constraint information. The image decoding apparatus may additionally use information on the parameter set and/or the general constraint information to decode the image. The signaling information, received information, and/or syntax elements described in the present disclosure may be obtained from the bitstream by being decoded through the decoding process. For example, the entropy decoder 210 may decode the information in the bitstream based on coding methods such as exponential Golomb encoding, CAVLC, or CABAC, and may output a syntax element value necessary for image reconstruction and quantized values of a transform coefficient related to a residual. More specifically, the CABAC entropy decoding method may receive a bin corresponding to a syntax element in the bitstream, may determine a context model using the information of the decoding target syntax element, the decoding information of neighboring block and the decoding target block, or information of previously decoded symbol/bin, may predict the probability of bin occurrence according to the determined context model, and may perform arithmetic decoding of the bin to generate a symbol corresponding to each syntax element. In this case, the CABAC entropy decoding method may update the context model for the next symbol/bin context model using the decoded symbol/bin information after determining the context model. Among the decoded information from the entropy decoder 210, the prediction-related information may be provided to the predictor (inter predictor 260 and intra predictor 265), and the residual value which is entropy decoded by the entropy decoder 210, in other words, the quantized transform coefficients and related parameter information, may be input to the dequantizer 220. Additionally, among the decoded information from the entropy decoder 210, filtering-related information may be provided to the filter 240. Meanwhile, a receiver (not shown) that receives the signal output from the image encoding apparatus may be additionally configured as an internal/external element of the image decoding apparatus 200, or the receiver may be configured as a component of the entropy decoder 210.

Meanwhile, the image decoding apparatus according to the present disclosure may also be referred to as a video/image/picture decoding apparatus. The image decoding apparatus may include an information decoder (video/image/picture information decoder) and/or a sample decoder (video/image/picture sample decoder). The information decoder may include the entropy decoder 210, and the sample decoder may include at least one of the dequantizer 220, the inverse transformer 230, the adder 235, the filter 240, the memory 250, the inter predictor 260, or the intra predictor 265.

The dequantizer 220 may dequantize the quantized transform coefficients and output the transform coefficients. The dequantizer 220 may rearrange the quantized transform coefficients into a two-dimensional block. In this case, the rearrangement may be performed based on the coefficient scan order applied in the image encoding apparatus. The dequantizer 220 may perform dequantization on the quantized transform coefficients using quantization parameter (i.e., quantization step size information) and may obtain transform coefficients.

The inverse transformer 230 may perform an inverse transform on the transform coefficients to obtain a residual signal (residual block, or residual sample array).

The predictor may perform prediction for the current block and generate a predicted block that includes prediction samples for the current block. The predictor may determine whether intra prediction or inter prediction is applied to the current block based on the prediction-related information output from the entropy decoder 210 and may determine a specific intra/inter prediction mode (prediction method).

That the predictor may generate a prediction signal based on various prediction methods (techniques) which will be described later is the same as described in the explanation of the predictor in the image encoding apparatus 100.

The intra predictor 265 may predict the current block by referring to samples within the current picture. The explanation of the intra predictor 185 may also be applied in the same way to the intra predictor 265.

The inter predictor 260 may derive a predicted block for the current block based on a reference block (reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, the inter predictor 260 may construct a motion information candidate list based on neighboring blocks and derive the motion vector and/or reference picture index of the current block based on the received candidate selection information. Inter prediction may be performed based on various prediction modes (methods), and the prediction-related information may include information indicating the inter prediction mode (method) applied to the current block.

The adder 235 may generate a reconstructed signal (reconstructed picture, reconstructed block, reconstructed sample array) by adding the obtained residual signal to the prediction signal (predicted block, predicted sample array) output from the predictor (including the inter predictor 260 and/or the intra predictor 265). When there is no residual for the target block, such as when the skip mode is applied, the predicted block may be used as the reconstructed block. The explanation of the adder 155 may also be applied in the same way to the adder 235. The adder 235 may be referred to as a reconstructor or a reconstructed block generator. The generated reconstructed signal may be used for intra prediction of the next target block within the current picture and as described later, may also be used for inter prediction of the next picture after undergoing filtering.

The filter 240 may apply filtering to the reconstructed signal to enhance subjective/objective quality. For example, the filter 240 may apply various filtering methods to the reconstructed picture to generate a modified reconstructed picture, and the modified reconstructed picture may be stored in the memory 250, specifically in the DPB of the memory 250. The various filtering methods may include, for example, deblocking filtering, sample adaptive offset, adaptive loop filter, bilateral filter, etc.

The (modified) reconstructed picture stored in the DPB of the memory 250 may be used as a reference picture in the inter predictor 260. The memory 250 may store the motion information of a block in the current picture where motion information has been derived (or decoded) and/or the motion information of blocks in already reconstructed picture. The stored motion information may be transmitted to the inter predictor 260 to be used as motion information of a spatial neighboring block or a temporal neighboring block. The memory 250 may store the reconstructed samples of reconstructed blocks in the current picture and transmit them to the intra predictor 265.

In this specification, the embodiments described for the filter 160, the inter predictor 180, and the intra predictor 185 of the image encoding apparatus 100 may be applied in the same or corresponding manner to the filter 240, the inter predictor 260, and the intra predictor 265 of the image decoding apparatus 200.

**General Inter Prediction**

The predictor of an image encoding apparatus 100 and an image decoding apparatus 200 may perform inter prediction in a block unit to derive a prediction sample. Inter prediction may be prediction derived in a manner dependent on data elements (e.g., sample values, or motion information, etc.) of picture(s) other than a current picture. When inter prediction is applied to a current block, a predicted block (a prediction sample array) for a current block may be derived based on a reference block (a reference sample array) specified by a motion vector on a reference picture indicated by a reference picture index. In this case, in order to reduce the amount of motion information transmitted in an inter prediction mode, the motion information of a current block may be predicted in a block, sub-block or sample unit based on the correlation of motion information between a neighboring block and a current block. The motion information may include a motion vector and a reference picture index. The motion information may further include information on an inter prediction type (L0 prediction, L1 prediction, Bi prediction, etc.). When inter prediction is applied, a neighboring block may include a spatial neighboring block existing in a current picture and a temporal neighboring block existing in a reference picture. A reference picture including the reference block and a reference picture including the temporal neighboring block may be the same or different. The temporal neighboring block may be called a collocated reference block, a collocated CU (colCU), etc., and a reference picture including the temporal neighboring block may be called a collocated picture (colPic). For example, a motion information candidate list may be constructed based on neighboring blocks of a current block, and flag or index information indicating which candidate is selected (used) to derive the motion vector and/or reference picture index of the current block may be signaled. Inter prediction may be performed based on various prediction modes, and for example, in case of a skip mode and a merge mode, the motion information of a current block may be the same as the motion information of a selected neighboring block. For a skip mode, unlike a merge mode, a residual signal may not be transmitted. For a motion vector prediction (MVP) mode, the motion vector of a selected neighboring block may be used as a motion vector predictor, and a motion vector difference may be signaled. In this case, the motion vector of the current block may be derived by using the sum of the motion vector predictor and the motion vector difference.

The motion information may include L0 motion information and/or L1 motion information according to an inter prediction type (L0 prediction, L1 prediction, Bi prediction, etc.). A motion vector in a L0 direction may be called a L0 motion vector or MVL0, and a motion vector in a L1 direction may be called a L1 motion vector or MVL1. Prediction based on a L0 motion vector may be called L0 prediction, prediction based on a L1 motion vector may be called L1 prediction and prediction based on both the L0 motion vector and the L1 motion vector may be called bi-prediction. Here, a L0 motion vector may represent a motion vector associated with reference picture list L0 (L0), and a L1 motion vector may represent a motion vector associated with reference picture list L1 (L1). Reference picture list L0 may include pictures before the current picture in output order as reference pictures, and reference picture list L1 may include pictures after the current picture in output order. The previous pictures may be called a forward (reference) picture, and the subsequent pictures may be called a backward (reference) picture. The reference picture list L0 may further include pictures after the current picture in output order as reference pictures. In this case, the previous pictures may be indexed first and the subsequent pictures may be indexed next within the reference picture list L0. The reference picture list L1 may further include pictures before the current picture in output order as reference pictures. In this case, the subsequent pictures may be indexed first and the previous pictures may be indexed next within the reference picture list 1. Here, output order may correspond to picture order count (POC) order.

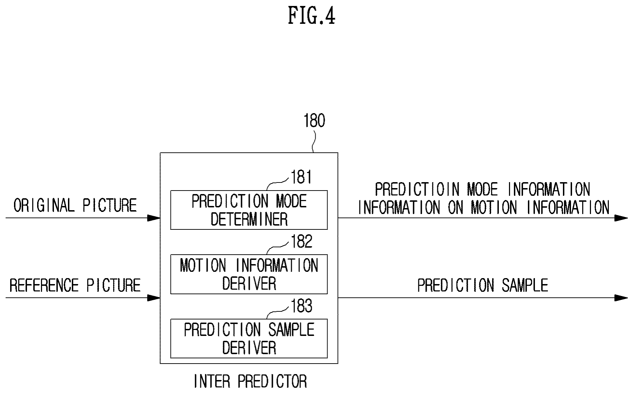

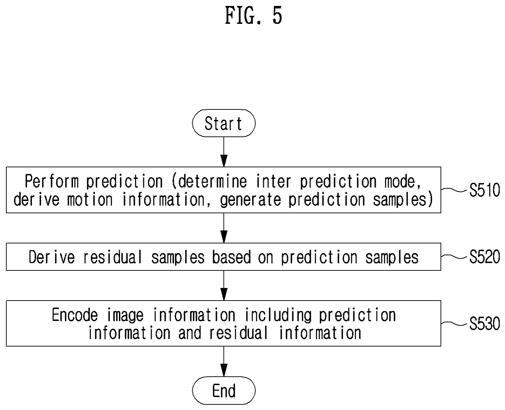

FIG. 4 is a diagram schematically representing an inter predictor 180 of an image encoding apparatus 100, and FIG. 5 is a flowchart representing a method for encoding an image based on inter prediction.

An image encoding apparatus 100 may perform inter prediction on a current block S510. An image encoding apparatus 100 may derive the inter prediction mode and motion information of a current block and generate prediction samples of the current block. Here, procedures of determining an inter prediction mode, deriving motion information and generating prediction samples may be performed simultaneously or any one procedure may be performed before other procedures. For example, the inter predictor 180 of an image encoding apparatus 100 may include a prediction mode determiner 181, a motion information deriver 182 and a prediction sample deriver 183, and may determine a prediction mode for the current block in a prediction mode determiner 181, derive motion information of the current block in a motion information deriver 182 and derive prediction samples of the current block in a prediction sample deriver 183. For example, the inter predictor 180 of an image encoding apparatus 100 may search for a block similar to the current block within a certain region (a search range) of reference pictures through motion estimation and derive a reference block whose difference from the current block is minimal or less than or equal to a certain standard. Based thereon, a reference picture index indicating a reference picture where the reference block is positioned may be derived, and a motion vector may be derived based on a positional difference between the reference block and the current block. An image encoding apparatus 100 may determine a mode applied to the current block among various prediction modes. An image encoding apparatus 100 may compare a RD cost for the various prediction modes and determine an optimal prediction mode for the current block.

For example, when a skip mode or a merge mode is applied to the current block, an image encoding apparatus 100 may construct a merge candidate list described below and derive a reference block whose difference from the current block is minimal or less than or equal to a certain standard among the reference blocks indicated by merge candidates included in the merge candidate list. In this case, a merge candidate associated with the derived reference block may be selected, and merge index information indicating the selected merge candidate may be generated and signaled to a decoding device. The motion information of the current block may be derived by using the motion information of the selected merge candidate.

As another example, when an (A)MVP mode is applied to the current block, an image encoding apparatus 100 may construct an (A)MVP candidate list described below and use the motion vector of a motion vector predictor (mvp) candidate selected among the mvp candidates included in the (A)MVP candidate list as the mvp of the current block. In this case, for example, a motion vector indicating a reference block derived by motion estimation described above may be used as the motion vector of the current block, and a mvp candidate having a motion vector with the smallest difference from the motion vector of the current block among the mvp candidates may become the selected mvp candidate. A motion vector difference (MVD) which is a difference obtained by subtracting the mvp from the motion vector of the current block may be derived. In this case, information about the MVD may be signaled to an image decoding apparatus 200. In addition, when an (A)MVP mode is applied, the value of the reference picture index may be constructed as reference picture index information and signaled separately to the image decoding apparatus 200.

An image encoding apparatus 100 may derive residual samples based on the prediction samples S520. An image encoding apparatus 100 may derive the residual samples by comparing the original samples of the current block with the prediction samples.

An image encoding apparatus 100 may encode image information including prediction information and residual information S530. An image encoding apparatus 100 may output encoded image information in the form of a bitstream. The prediction information is information related to the prediction procedure, and may include information about prediction mode information (e.g., a skip flag, a merge flag or a mode index, etc.) and motion information. The information about motion information may include candidate selection information (e.g., a merge index, a mvp flag or a mvp index) which is information for deriving a motion vector. In addition, the information about motion information may include information about the above-described MVD and/or reference picture index information. In addition, the information about motion information may include information representing whether L0 prediction, L1 prediction or bi-prediction is applied. The residual information is information about the residual samples. The residual information may include information about quantized transform coefficients for the residual samples.

An output bitstream may be stored in a (digital) storage medium and transmitted to a decoding device or may be transmitted to an image decoding apparatus 200 through a network.

Meanwhile, as described above, an image encoding apparatus 100 may generate a reconstructed picture (including reconstructed samples and reconstructed blocks) based on the reference samples and the residual samples. This is to derive the same prediction result as that performed by an image decoding apparatus 200 from an image encoding apparatus 100, which may improve coding efficiency. Accordingly, an image encoding apparatus 100 may store a reconstructed picture (or reconstructed samples, reconstructed blocks) in a memory and utilize it as a reference picture for inter prediction. As described above, an in-loop filtering procedure, etc. may be further applied to the reconstructed picture.

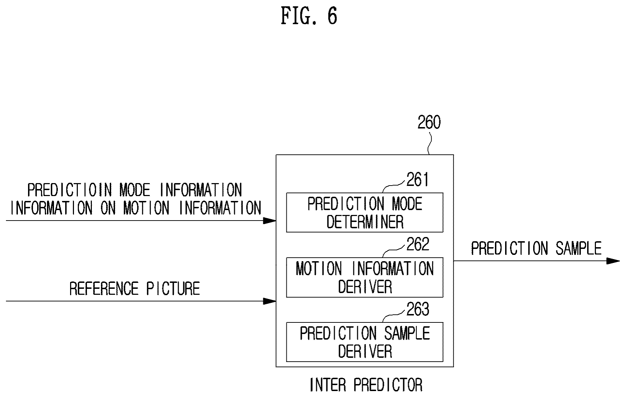

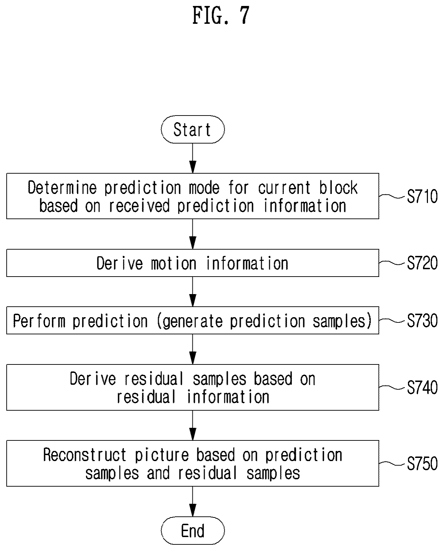

FIG. 6 is diagram schematically representing an inter predictor 260 of an image decoding apparatus 200, and FIG. 7 is a flowchart representing a method for decoding an image based on inter prediction.

An image decoding apparatus 200 may perform an operation corresponding to an operation performed in the image encoding apparatus 100. An image decoding apparatus 200 may perform prediction on a current block based on received prediction information and derive prediction samples.

Specifically, an image decoding apparatus 200 may determine a prediction mode for the current block based on received prediction information S710. An image decoding apparatus 200 may determine which inter prediction mode is applied to the current block based on prediction mode information within the prediction information.

For example, whether the merge mode or the (A)MVP mode is applied to the current block may be determined based on the merge flag. Alternatively, one of various inter prediction mode candidates may be selected based on the mode index. The inter prediction mode candidates may include a skip mode, a merge mode and/or an (A)MVP mode or may include various inter prediction modes described below.

An image decoding apparatus 200 may derive motion information of the current block based on the determined inter prediction mode S720. For example, when a skip mode or a merge mode is applied to the current block, an image decoding apparatus 200 may construct a merge candidate list described below and select one of the merge candidates included in the merge candidate list. The selection may be performed based on the above-described selection information (merge index). The motion information of the current block may be derived by using the motion information of the selected merge candidate. The motion information of the selected merge candidate may be used as the motion information of the current block.

As another example, when an (A)MVP mode is applied to the current block, an image decoding apparatus 200 may construct an (A)MVP candidate list described below and use the motion vector of a mvp candidate selected among the motion vector predictor (mvp) candidates included in the (A)MVP candidate list as the mvp of the current block. The selection may be performed based on the above-described selection information (a mvp flag or a mvp index). In this case, the MVD of the current block may be derived based on information about the MVD, and the motion vector of the current block may be derived based on the mvp of the current block and the MVD. In addition, the reference picture index of the current block may be derived based on the reference picture index information. A picture indicated by the reference picture index in a reference picture list for the current block may be derived as a reference picture referred to for inter prediction of the current block.

Meanwhile, as described below, motion information of the current block may be derived without constructing a candidate list, and in this case, motion information of the current block may be derived according to a procedure initiated in a prediction mode described below. In this case, candidate list construction as described above may be omitted.

An image decoding apparatus 200 may generate prediction samples for the current block based on the motion information of the current block S730. In this case, the reference picture may be derived based on the reference picture index of the current block, and prediction samples of the current block may be derived by using samples of a reference block indicated by the motion vector of the current block on the reference picture. In this case, as described below, a prediction sample filtering procedure for all or part of prediction samples of the current block may be further performed in some cases.

For example, the inter predictor 260 of an image decoding apparatus 200 may include a prediction mode determiner 261, a motion information deriver 262 and a prediction sample deriver 263, and may determine a prediction mode for the current block based on prediction mode information received in a prediction mode determiner 181, derive motion information (a motion vector and/or a reference picture index, etc.) of the current block based on information about motion information received in a motion information deriver 182 and derive prediction samples of the current block in a prediction sample deriver 183.

An image decoding apparatus 200 may generate residual samples for the current block based on received residual information S740. An image decoding apparatus 200 may generate reconstructed samples for the current block based on the prediction samples and the residual samples and generate a reconstructed picture based on this S750. Hereinafter, as described above, an in-loop filtering procedure, etc. may be further applied to the reconstructed picture.

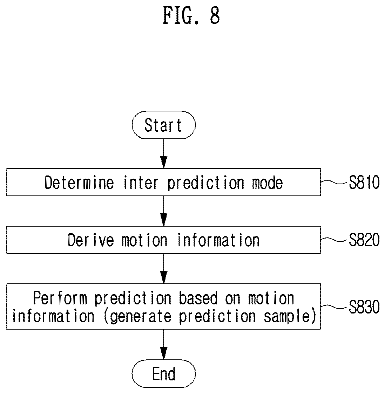

Referring to FIG. 8, as described above, an inter prediction procedure may include an inter prediction mode determination step S810, a motion information derivation step S820 according to a determined prediction mode and a prediction performance (prediction sample generation) step S830 based on derived motion information. The inter prediction procedure may be performed in an image encoding apparatus 100 and an image decoding apparatus 200 as described above.

## Determine an inter prediction mode

A variety of inter prediction modes may be used for prediction of a current block in a picture. For example, various modes such as a merge mode, a skip mode, a motion vector prediction (MVP) mode, an affine mode, a sub-block merge mode, a merge with MVD (MMVD) mode, etc. may be used. A decoder side motion vector refinement (DMVR) mode, an adaptive motion vector resolution (AMVR) mode, a bi-prediction with CU-level weight (BCW), a bi-directional optical flow (BDOF), etc. may be used as an additional or alternative mode. An affine mode may also be called an affine motion prediction mode. A MVP mode may also be called an advanced motion vector prediction (AMVP) mode. In this document, some modes and/or a motion information candidate derived by some modes may be included as one of the motion information-related candidates of other modes. For example, a HMVP candidate may be added as the merge candidate of the merge/skip mode or may be added as the mvp candidate of the MVP mode.

Prediction mode information indicating the inter prediction mode of a current block may be signaled from an image encoding apparatus 100 to an image decoding apparatus 200. The prediction mode information may be included in a bitstream and received by an image decoding apparatus 200. The prediction mode information may include index information indicating one of multiple candidate modes. Alternatively, an inter prediction mode may be indicated through hierarchical signaling of flag information. In this case, the prediction mode information may include at least one flag. For example, whether to apply a skip mode may be indicated by signaling a skip flag, and when a skip mode is not applied, whether to apply a merge mode may be indicated by signaling a merge flag, and when a merge mode is not applied, a MVP mode may be indicated to be applied or a flag for additional distinction may be further signaled. An affine mode may be signaled as an independent mode or may be signaled as a dependent mode such as a merge mode or a MVP mode, etc. For example, an affine mode may include an affine merge mode and an affine MVP mode.

## Motion Information Derivation

Inter prediction may be performed by using the motion information of a current block. An image encoding apparatus 100 may derive optimal motion information for a current block through a motion estimation procedure. For example, an image encoding apparatus 100 may use an original block within an original picture for a current block to search for a similar reference block with high correlation in a fractional pixel unit within a predetermined search range within a reference picture and derive motion information through this. The similarity of blocks may be derived based on a difference in phase-based sample values. For example, the similarity of blocks may be calculated based on a SAD between a current block (or the template of a current block) and a reference block (or the template of a reference block). In this case, motion information may be derived based on a reference block with the smallest SAD within a search range. The derived motion information may be signaled to an image decoding apparatus 200 according to various methods based on an inter prediction mode.

## Prediction Sample Generation

A predicted block for a current block may be derived based on motion information derived according to a prediction mode. The predicted block may include prediction samples (prediction sample arrays) of the current block.

When the motion vector of a current block indicates a fractional sample unit, an interpolation procedure may be performed, and through this, prediction samples of the current block may be derived based on reference samples in a fractional sample unit within a reference picture. When affine inter prediction is applied to a current block, prediction samples may be generated based on a MV in a sample/sub-block unit. When bi-prediction is applied, prediction samples derived through the weighted sum or weighted average (according to a phase) of prediction samples derived based on L0 prediction (i.e., prediction using MVL0 and a reference picture within reference picture list L0) and prediction samples derived based on L1 prediction (i.e., prediction using MVL1 and a reference picture within reference picture list L1) may be used as the prediction samples of a current block. When bi-prediction is applied, if a reference picture used for L0 prediction and a reference picture used for L1 prediction are positioned in a different temporal direction based on a current picture (i.e., when it corresponds to bi-prediction and bidirectional prediction), it may be called true bi-prediction.

As described above, reconstructed samples and reconstructed pictures may be generated based on derived prediction samples, and a procedure such as in-loop filtering, etc. may be performed thereafter.

## Geometry Partitioning Mode (GPM)

A GPM may be supported for inter prediction. A GPM may be signaled as a type of merge mode by using a CU-level flag along with other merge modes such as a regular merge mode, a merge mode with MVD (MMVD) mode, a CIIP mode, a sub-block merge mode, etc. A GPM may support a total of 64 partitionings for m,n $\in\{3\cdots6\}$ in each possible CU size w×h=$2^m$×$2^n$ excluding 8x64 and 64x8.

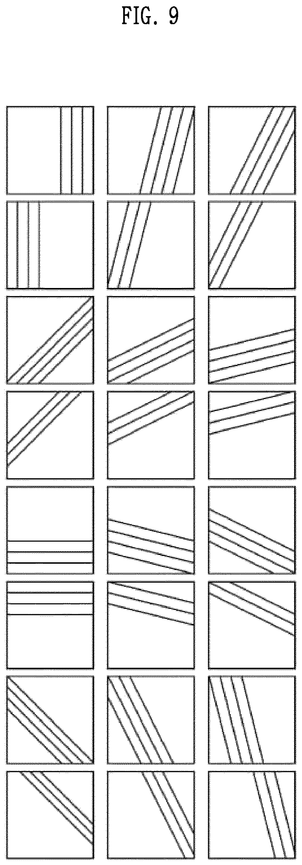

When a GPM is used, a CU may be partitioned into two parts by a geometrically positioned straight line (a partition line) as shown in FIG. 9. The position of a partitioning line may be mathematically derived from the angle and offset parameters of specific partitioning. Each part of geometry partitioning within a CU may be inter-predicted by using its motion, and only unidirectional prediction is allowed for each partitioning. In other words, each part may have one motion vector and one reference index. Since unidirectional prediction constraint is applied, only two motion compensation predictions may be required for each CU, similar to the existing bidirectional prediction.

When a GPM is used for a current CU, a geometry partitioning index (a GPM index) representing the partitioning mode (angle and offset) of geometry partitioning and two merge indexes for partitionings may be signaled. The maximum number of GPM candidate sizes is explicitly signaled in a SPS, which may represent syntax binarization for GPM merge indexes. After each part of geometry partitioning is predicted, sample values according to a geometry partitioning edge may be adjusted by using blending processing with an adaptive weight. It is a prediction signal for the entire CU and like other prediction modes, transform and quantization processes may be applied to the entire CU. Finally, the motion field of a CU predicted by using a GPM may be stored.

When a GPM is applied, syntaxes in Table 1 may be signaled, and an angle and a distance may be derived by using Table 2 based on a signaled GPM index (merge_gpm_partition_idx), and one block may be partitioned into two arbitrary areas based on an angle and a distance. The prediction block of each area may be generated by using each different motion prediction information, and prediction may be performed by blending generated prediction blocks and using them as prediction blocks of a corresponding block.

[Table 1]

| | |
|---|---|
| **merge_gpm_partition_idx**[ x0 ][ y0 ] | **ae(v)** |
| **merge_gpm_idx0**[ x0 ][ y0 ] | **ae(v)** |
| if( MaxNumGpmMergeCand > 2 ) | |
| **merge_gpm_idx1**[ x0 ][ y0 ] | **ae(v)** |

[Table 2]

| merge_gpm_partition_idx | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| **angleIdx** | 0 | 0 | 2 | 2 | 2 | 2 | 3 | 3 | 3 | 3 | 4 | 4 | 4 | 4 | 5 | 5 |
| **distanceIdx** | 1 | 3 | 0 | 1 | 2 | 3 | 0 | 1 | 2 | 3 | 0 | 1 | 2 | 3 | 0 | 1 |
| **merge_gpm_partition_idx** | 16 | 17 | 18 | 19 | 20 | 21 | 22 | 23 | 24 | 25 | 26 | 27 | 28 | 29 | 30 | 31 |
| **angleIdx** | 5 | 5 | 8 | 8 | 11 | 11 | 11 | 11 | 12 | 12 | 12 | 12 | 13 | 13 | 13 | 13 |
| **distanceIdx** | 2 | 3 | 1 | 3 | 0 | 1 | 2 | 3 | 0 | 1 | 2 | 3 | 0 | 1 | 2 | 3 |

(continued)

| merge_gpm_partitio-n_idx | 32 | 33 | 34 | 35 | 36 | 37 | 38 | 39 | 40 | 41 | 42 | 43 | 44 | 45 | 46 | 47 |
|---|---|---|---|---|---|---|---|---|---|---|---|---|---|---|---|---|
| angleIdx | 14 | 14 | 14 | 14 | 16 | 16 | 18 | 18 | 18 | 19 | 19 | 19 | 20 | 20 | 20 | 21 |
| distanceIdx | 0 | 1 | 2 | 3 | 1 | 3 | 1 | 2 | 3 | 1 | 2 | 3 | 1 | 2 | 3 | 1 |
| merge_gpm_partition_idx | 48 | 49 | 50 | 51 | 52 | 53 | 54 | 55 | 56 | 57 | 58 | 59 | 60 | 61 | 62 | 63 |
| angleIdx | 21 | 21 | 24 | 24 | 27 | 27 | 27 | 28 | 28 | 28 | 29 | 29 | 29 | 30 | 30 | 30 |
| distanceIdx | 2 | 3 | 1 | 3 | 1 | 2 | 3 | 1 | 2 | 3 | 1 | 2 | 3 | 1 | 2 | 3 |

**Uni-prediction Candidate List Construction**

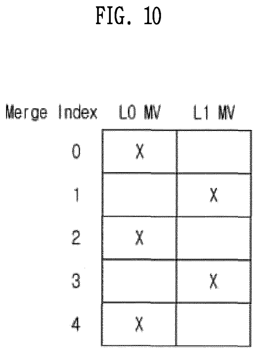

In a GPM, a uni-prediction candidate list may be directly derived from a merge candidate list constructed according to an extended merge prediction process. n may be indicated as the index of a unidirectional motion within a geometry uni-prediction candidate list. The LX motion vector of the n-th extended merge candidate has X equal to the parity of n and may be used as the n-th unidirectional motion vector for a GPM. These motion vectors are indicated as "x" in FIG. 10. When the corresponding LX motion vector of the n-th extended merge candidate does not exist, the L(1-X) motion vector of the same candidate may be used as a unidirectional motion vector for a GPM.

**Blending according to Geometry Partitioning Edge**

After each part of the geometry partitioning is predicted by using its motion, blending may be applied to two prediction signals to derive samples around a geometry partitioning edge. A blending weight for each CU position may be derived based on a distance between an individual position and a partitioning edge.

A distance from position (x, y) to a partitioning edge may be derived based on Equation 1.

[Equation 1]

$$d(x, y) = (2x + 1 - w)\cos(\varphi_i) + (2y + 1 - h)\sin(\varphi_i) - \rho_j$$

$$\rho_j = \rho_{x,j}\cos(\varphi_i) + \rho_{y,j}\sin(\varphi_i)$$

$$\rho_{x,j} = \begin{cases} 0 & i \,\%\, 16 \,=\, 8 \text{ or } (i \,\%\, 16 \,\neq\, 0 \text{ and } h \,\geq\, w) \\ \pm(j \times w) \gg 2 & otherwise \end{cases}$$

$$\rho_{y,j} = \begin{cases} \pm(j \times h) \gg 2 & i \,\%\, 16 \,=\, 8 \text{ or } (i \,\%\, 16 \,\neq\, 0 \text{ and } h \,\geq\, w) \\ 0 & otherwise \end{cases}$$

In Equation 1, i and j are indexes for the angle and offset of the geometry partitioning, which may be determined according to a signaled geometry partitioning index (merge_gpm_partition_idx). $\rho_{x,j}$ and $\rho_{y,j}$ may be determined according to angle index i.

The weights of each geometry partitioning may be derived based on Equation 2.

[Equation 2]

$$wIdxL(x, y) = partIdx \,?\, 32 + d(x, y) : 32 - d(x, y)$$

$$w_0(x, y) = \frac{Clip3(0, 8, (wIdxL(x,y) + 4) \gg 3)}{8}$$

$$w_1(x, y) = 1 - w_0(x, y)$$

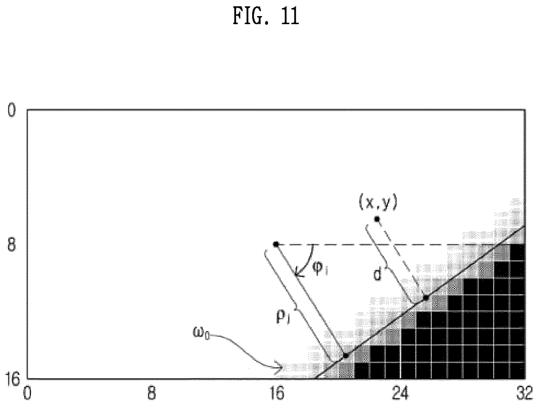

PartIdx may be determined according to angle index i. An example for weight $w_o$ is shown in FIG. 11.

**Motion Field Storage for GPM**

Mv1 for the first part of the geometry partitioning, Mv2 for the second part of the geometry partitioning and Mv which is a combination of Mv1 and Mv2 may be stored in the motion field of a CU coded with a GPM.

'The stored motion vector type' for each individual position within a motion field may be derived based on Equation 3.

[Equation 3]

$$sType = abs(motionIdx) < 32 ? 2$$

$$: (motionIdx \leq 0 ? (1 - partIdx) : partIdx)$$

In Equation 3, motionIdx is the same as d(4x+2, 4y+2), which may be recalculated according to the first formula of Equation 1. partIdx may be determined according to angle index i.

When the value of sType is the same as 0 or 1, Mv0 or Mv1 may be stored in a corresponding motion field. Otherwise, when the value of sType is the same as 2, Mv combined from Mv1 and Mv2 may be stored. The combined Mv may be generated by using the following processes.

- When Mv1 and Mv2 are derived from a different reference picture list (one is derived from L0 and the other is derived from L1), Mv1 and Mv2 are simply combined to form a bidirectional motion vector.
- Otherwise, when Mv1 and Mv2 are derived from the same reference picture list, only unidirectional motion Mv2 is stored.

**Embodiment**

The present disclosure proposes a method for improving prediction accuracy by deriving compensation information (illumination compensation parameter) for a reference block by a GPM and applying this to a reference block.

The methods of the present disclosure are summarized as follows.

1) When a current block is partitioned and predicted by a GPM, a reconstructed neighboring area around a current block (the neighboring area of a current block) and a reconstructed neighboring area around a reference block (the neighboring area of a reference block) may be used to derive compensation information and derived compensation information may be used to compensate (modify) a reference block, thereby generating the prediction samples of a current block.

2) When a current block is partitioned and predicted by a GPM, the neighboring area of a current block and the neighboring area of a reference block may be determined according to the partitioning direction (partitioning angle) and/or the partitioning offset (distance) of a GPM.

3) When a current block is partitioned and predicted by a GPM, information on whether compensation information is derived or applied may be signaled through various methods.

**Embodiment 1**

Embodiment 1 relates to a method for deriving compensation information by using the neighboring area of a current block and the neighboring area of a reference block when a current block is partitioned and predicted by a GPM.

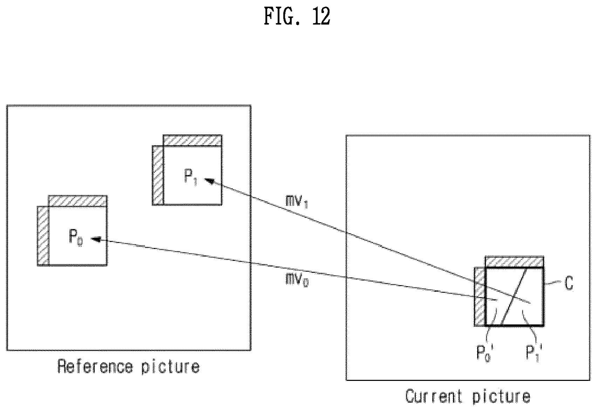

FIG. 12 represents an example for the neighboring area of a current block and the neighboring area of a reference block. Referring to FIG. 12, a current block (C) within a current image is a block encoded by a GPM, and may be partitioned into two parts ($P_0$', $P_1$'). In addition, prediction samples for a current block may be generated by using two parts. In the present disclosure, parts may be referred to as "the first block" and "the second block," respectively. For example, $P_0$' may be referred to as "the first block" and $P_1$' may be referred to as "the second block". As another example, $P_0$' may be referred to as "the second block" and $P_1$' may be referred to as "the first block". In FIG. 12, areas represented by a pattern may be the neighboring area of a current block or the neighboring area of a reference block.

Information on the partitioning direction of a GPM may be determined through a bitstream or may be derived from an image decoding device 200. When motion vectors for $P_0$' and $P_1$' are $mv_0$ and $mv_1$, respectively, two reference blocks $P_0$ and $P_1$ may be obtained from a reference image by using their respective motion vectors. FIG. 12 represents an example in which two reference blocks are obtained from one reference image, and each reference block may be obtained from a different list (L0 or L1) or/and another reference image. Two reference blocks may be blended through a weighted average based on a geometry partitioning boundary.

Whether reference block modification is used by using compensation information according to the present disclosure may be determined through a bitstream or may be derived from an image decoding device 200. When compensation is applied, compensation information may be derived by using the neighboring area of a current block and the neighboring area of a reference block. The compensation information is information for compensating for a luma difference between a current block and a reference block, which may be defined as in Equation 4.

[Equation 4]

$$Cur_N(x, y) = \alpha * Ref_N(x, y) + \beta$$

In Equation 4, $Cur_N(x, y)$ represents the neighboring area of a current block, and $Ref_N(x, y)$ represents the neighboring area of a reference block. $\alpha$ and $\beta$ may represent compensation information. For example, $\alpha$ may represent scale information applied to the luma value of the neighboring area of a current block or the luma value of the neighboring area of a reference block, and $\beta$ may represent offset information applied to a luma value to which scale information is applied among the luma value of the neighboring area of a current block or the luma value of the neighboring area of a reference block. The compensation information may be derived as $\alpha$ and $\beta$ that minimize a difference between $Cur_N(x, y)$ and $Ref_N(x, y)$. A difference between $Cur_N(x, y)$ and $Ref_N(x, y)$ may be the sum of absolute difference (SAD) or the sum of square difference (SSD), etc. The compensation information may be derived based on various areas such as a picture, a tile, a slice, a coding tree unit (CTU), a coding unit, etc.

The compensation information may be derived for $P_0$' and $P_1$', respectively. In other words, compensation information $\alpha_0$ and $\beta_0$ for $P_0$' may be derived based on the neighboring area of a current block and the neighboring area of $P_0$. In addition, compensation information $\alpha_1$ and $\beta_1$ for $P_1$' may be derived based on the neighboring area of a current block and the neighboring area of $P_1$.

Prediction samples of a current block (prediction block or final prediction block) may be derived based on Equation 5.

[Equation 5]

$$P_{cur} = (M_0 \otimes (\alpha_0 * P_0 + \beta_0) + M_1 \otimes (\alpha_1 * P_1 + \beta_1) + shift/2) \gg shift$$

In Equation 5, Pcur represents prediction samples of a current block. Compensation information ($\alpha_0$ and $\beta_0$) and ($\alpha_1$ and $\beta_1$) derived for reference blocks $P_0$ and $P^1$ may be applied to reference blocks, respectively, and reference blocks to which compensation information is applied may be blended based on the values of blending masks $M_0$ and $M_1$ for a GPM to generate prediction samples of a current block. In Equation 5, the $\otimes$ operation represents a pixel unit multiplication operation for a mask value, and shift represents a normalization value for a blending mask.

According to Embodiment 1 described above, compensation information for the lower block of a current block may be obtained and applied to reference blocks to improve prediction performance, thereby improving encoding efficiency.

**Embodiment 2**

Embodiment 2 relates to a method for determining the neighboring area of a current block and the neighboring area of a reference block based on the partitioning direction and/or partitioning offset of a GPM. Hereinafter, Embodiment 2 will be described focusing on a method for determining the neighboring area of a current block. The neighboring area of a reference block may be determined in the same method as a method for determining the neighboring area of a current block. Alternatively, the neighboring area of a reference block may be determined at a position corresponding to the neighboring area of a current block.

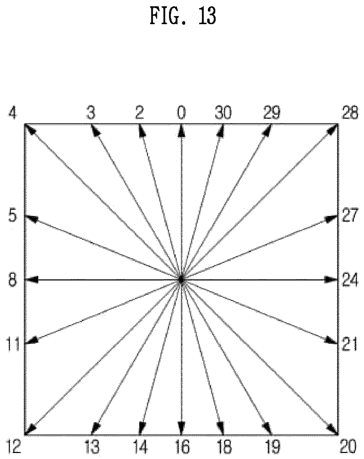

FIG. 13 represents the examples of block partitioning using a GPM. The partitioning directions of a GPM shown in FIG. 13 are exemplary, and a current block may be partitioned at another angle (or direction) not shown in FIG. 13. In addition, a straight line (a partitioning line) representing each partitioning direction may be moved in parallel horizontally or vertically, through which a current block may be partitioned into parts having an unequal ratio.

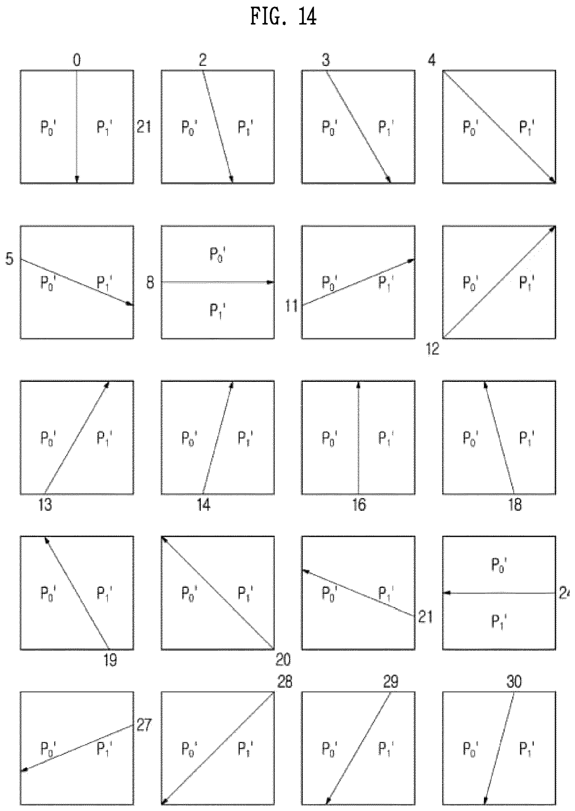

FIG. 14 represents various examples of $P_0$' and $P_1$' according to a partitioning direction when a current block is partitioned. Referring to FIG. 14, according to a partitioning direction, the position of $P_0$' and the position of $P_1$', the neighboring area of a current block may be different.

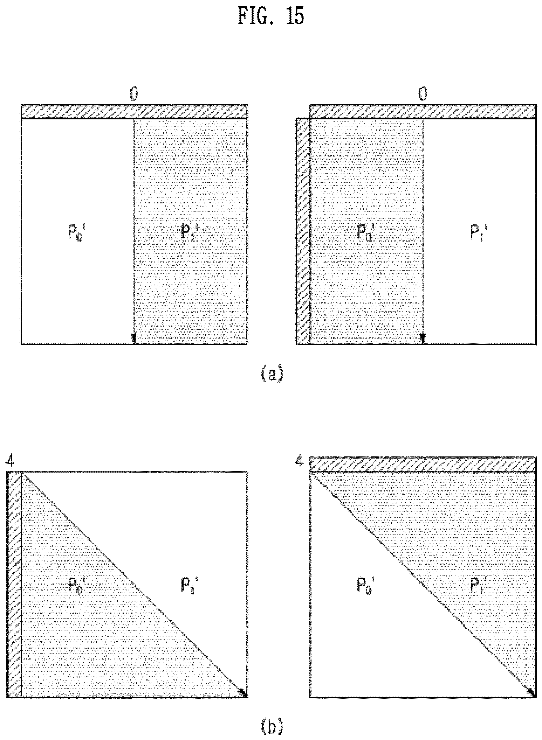

FIG. 15(a) represents the neighboring area of $P_0$' and the neighboring area of $P_1$' when a partitioning direction is number 0. Referring to FIG. 15(a), since $P_0$' is adjacent to the neighboring area of a current block in left and top directions,

compensation information for $P_0$' may be derived by using both a neighboring area in a left direction and a neighboring area in a top direction. In contrast, since $P_1$' is adjacent to the neighboring area of a current block only in a top direction, compensation information for $P_1$' may be derived by using only a neighboring area in a top direction.

FIG. 15(b) represents the neighboring area of $P_0$' and the neighboring area of $P_1$' when a partitioning direction is number 4. Referring to FIG. 15(b), since $P_0$' is adjacent to the neighboring area of a current block only in a left direction, compensation information for $P_0$' may be derived by using only a neighboring area in a left direction. In contrast, since $P_1$' is adjacent to the neighboring area of a current block only in a top direction, compensation information for $P_1$' may be derived by using only a neighboring area in a top direction.

In this way, compensation information for each of $P_0$' and $P_1$' may be derived by using only a neighboring area adjacent to each of $P_0$' and $P_1$'. Accordingly, compensation information for each of $P_0$' and $P_1$' may be derived more accurately, through which prediction performance may be improved and a difference signal may be reduced, thereby improving encoding efficiency.

Table 3 represents a position for the neighboring area of $P_0$' and a position for the neighboring area of $P_1$' according to a partitioning direction.

[Table 3]

| Geometric Partitioning Direction | $P_0$' | $P_1$' |
|---|---|---|
| 0 and 16 | Left and Top | Top |
| 2 and 18 | Left and Top | Top |
| 3 and 19 | Left and Top | Top |
| 4 and 20 | Left | Top |
| 5 and 21 | Left | Left and Top |
| 8 and 24 | Left and Top | Left |
| 11 and 27 | Left and Top | Left |
| 12 and 28 | Left and Top | Left and Top |
| 13 and 29 | Left and Top | Top |
| 14 and 30 | Left and Top | Top |

Referring to Table 3, partitioning direction no. 16 to no. 30 may be defined in the same direction as partitioning direction no. 0 to no. 14, and only a partitioning offset may be defined differently. In other words, a neighboring area used to derive compensation information when a partitioning direction is no. 16 to no. 30 may be defined identically to a neighboring area used to derive compensation information when a partitioning direction is no. 0 to no. 14.

When a partitioning direction is no. 12 and no. 28, $P_1$' may not be adjacent to the neighboring area of a current block. Accordingly, in this case, compensation information for $P_1$' may not be derived. In other words, when a partitioning direction is no. 12 and no. 28, only compensation information for $P_0$' may be derived and applied.

According to embodiments, compensation information may be derived by using only pixels adjacent to each of $P_0$' and $P_1$'. Pixels adjacent to $P_0$' and $P_1$' may be different according to a partitioning direction and a partitioning offset (a displacement value that a partitioning line moves in a horizontal direction or in a vertical direction).

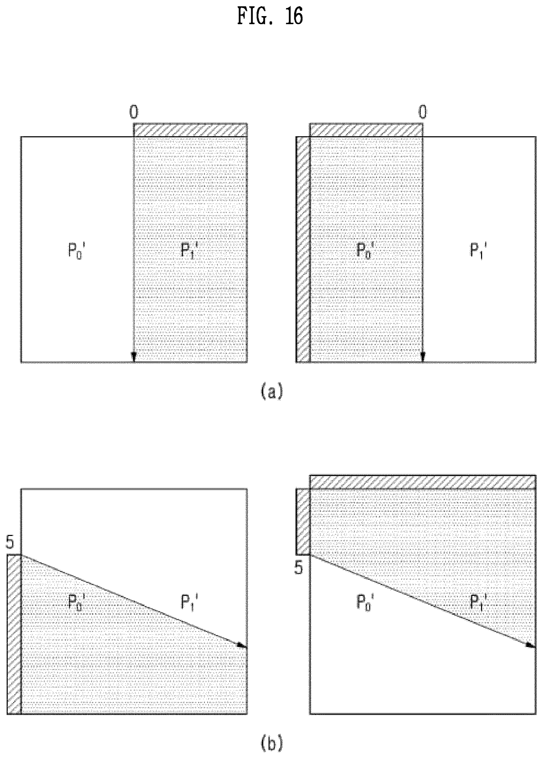

FIG. 16(a) represents a neighboring area in a pixel unit for $P_0$' and $P_1$' when a partitioning direction is number 0. Referring to FIG. 16(a), since $P_0$' is adjacent only to all pixels in a left direction and some pixels in an upper direction, compensation information for $P_0$' may be derived by using all pixels in a left direction and some pixels in an upper direction. In contrast, since $P_1$' is adjacent only to some pixels in an upper direction, compensation information for $P_1$' may be derived by using only some pixels in an upper direction.

FIG. 16(b) represents a neighboring area in a pixel unit for $P_0$' and $P_1$' when a partitioning direction is number 5. Referring to FIG. 16(b), since $P_0$' is adjacent only to some pixels in a left direction, compensation information for $P_0$' may be derived by using only some pixels in a left direction. In contrast, since $P_1$' is adjacent only to some pixels in a left direction and all pixels in an upper direction, compensation information for $P_1$' may be derived by using some pixels in a left direction and all pixels in an upper direction.

In this way, compensation information for each of $P_0$' and $P_1$' may be derived by using only a neighboring area adjacent to each of $P_0$' and $P_1$'. Accordingly, compensation information for each of $P_0$' and $P_1$' may be derived more accurately, through which prediction performance may be improved and a difference signal may be reduced, thereby improving encoding efficiency.

The methods for defining neighboring areas when the value of a partitioning offset is 0 were described above.

When the value of a partitioning offset is not 0, $P_0'$ and $P_1'$ may be partitioned at an unequal ratio and in this case, the neighboring area of each of $P_0'$ and $P_1'$ may be different according to the value of a partitioning offset.

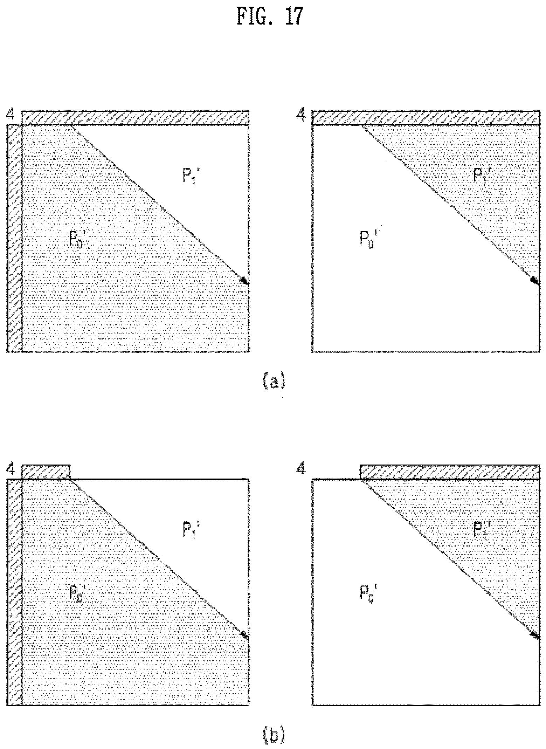

FIG. 17(a) represents that neighboring areas of $P_0'$ and $P_1'$ when a partitioning direction is number 4 and the value of a partitioning offset is 2. Referring to FIG. 17(a), unlike a case in which a partitioning direction is number 4 and the value of a partitioning offset is 0, since $P_0'$ is adjacent to the neighborhood both in left and upper directions, compensation information for $P_0'$ may be derived by using both a neighboring area in a left direction and a neighboring area in an upper direction. In contrast, since $P_1'$ is adjacent to the neighborhood only in an upper direction, compensation information for $P_1'$ may be derived by using only a neighboring area in an upper direction. In other words, compensation information for $P_1'$ may be derived in the same way as when the value of a partitioning offset is 0.

FIG. 17(b) represents a neighboring area in a pixel unit for $P_0'$ and $P_1'$ when a partitioning direction is number 4 and the value of a partitioning offset is 2. Referring to FIG. 17(b), since $P_0'$ is adjacent to all pixels in a left direction and some pixels in an upper direction, compensation information for $P_0'$ may be derived by using all pixels in a left direction and some pixels in an upper direction. In contrast, since $P_1'$ is adjacent only to some pixels in an upper direction, compensation information for $P_1'$ may be derived by using only some pixels in an upper direction.

In this way, since compensation information for each of $P_0'$ and $P_1'$ may be derived by adaptively selecting a neighboring area or pixel according to encoding information such as a partitioning offset value or a block size, etc., prediction accuracy may be improved.

Meanwhile, when only adjacent neighboring areas or adjacent pixels are used to derive compensation information for $P_0'$ and $P_1'$, the number of pixels for deriving compensation information may be insufficient. In order to solve this problem, the present disclosure proposes a method for deriving compensation information by increasing the number of pixels or extending some areas when the neighboring area of $P_0'$ and $P_1'$ is not a part of the neighboring area or is some pixels.

For example, compared to a reference area for deriving compensation information when a GPM mode is not applied, when the size of an area adjacent to each of $P_0'$ and $P_1'$ is positioned only on any one of the left or the top, the number of pixels is reduced to 1/2, so neighboring area extension proposed in the present disclosure may be performed.

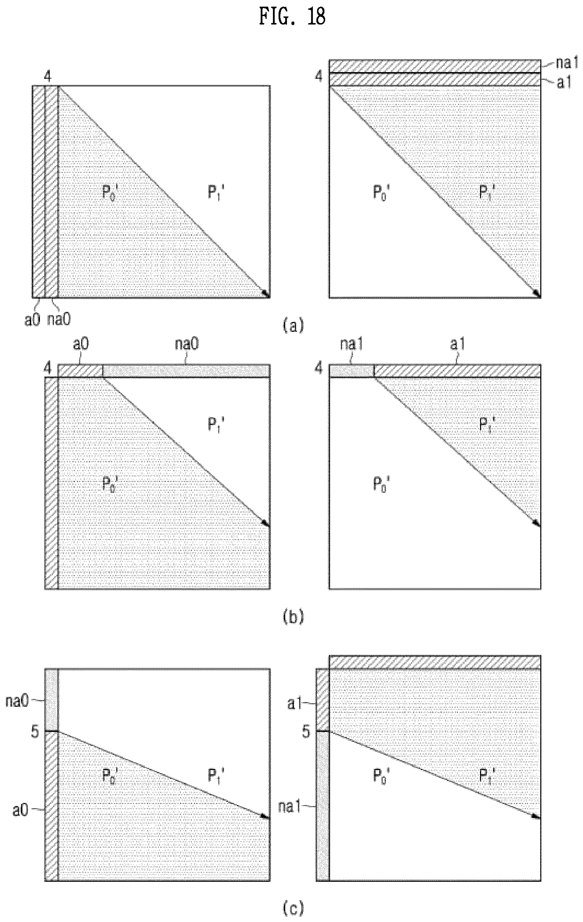

FIG. 18(a) represents an example of neighboring area extension when a partitioning direction is number 4. Referring to FIG. 18(a), $P_0'$ is adjacent to the neighborhood only in a left direction (a0), and $P_1'$ is adjacent to the neighborhood only in an upper direction (a1). In this case, the neighboring area of $P_0'$ may be extended two times in a left direction from the existing left area (a0) adjacent to $P_0'$ to a non-adjacent area (na0) not adjacent to $P_0'$, and the neighboring area of $P_1'$ may be extended two times in an upper direction from the existing top area (a1) adjacent to $P_1'$ to a non-adjacent area (na1) not adjacent to $P_1'$. In other words, a non-adjacent area may be positioned in the same direction as an adjacent area.

Another example of neighboring area extension is to extend a neighboring area in a predetermined direction when any one of $P_0'$ or $P_1'$ is adjacent only to some pixels in a left direction or in a top direction.

FIG. 18(b) represents an example of neighboring area extension when a partitioning direction is number 4 and the value of a partitioning offset is 2. Referring to FIG. 18(b), $P_0'$ is adjacent only to some pixels (a0) in a top direction, and $P_1'$ is also adjacent only to some pixels (a1) in a top direction. In this case, the neighboring area of $P_0'$ may be extended to non-adjacent pixels (na0). In other words, the neighboring area of $P_0'$ may be extended in a right direction to include some pixels (na1) adjacent to $P_1'$ in a top direction. In addition, the neighboring area of $P_1'$ may also be extended to non-adjacent pixels (na1). In other words, the neighboring area of $P_1'$ may be extended in a left direction to include some pixels (na0) adjacent to $P_0'$ in a top direction.

FIG. 18(c) represents an example of neighboring area extension when a partitioning direction is number 5. Referring to FIG. 18(c), $P_0'$ is adjacent only to some pixels (a0) in a left direction, and $P_1'$ is also adjacent only to some pixels (a1) in a left direction. In this case, the neighboring area of $P_0'$ may be extended to non-adjacent pixels (na0). In other words, the neighboring area of $P_0'$ may be extended in a top direction to include some pixels (na1) adjacent to $P_1'$ in a left direction. In addition, the neighboring area of $P_1'$ may also be extended to non-adjacent pixels (na1). In other words, the neighboring area of $P_1'$ may be extended in a lower direction to include some pixels (na0) adjacent to $P_0'$ in a left direction.

The neighboring area extension was described above, focusing on a case in which an extended neighboring area and an existing neighboring area are adjacent to each other. However, a neighboring area extended by neighboring area extension and an existing neighboring area may not be adjacent to each other. Similarly, when neighboring area extension is applied, a greater number of pixels within an extended neighboring area may be utilized to derive compensation information compared to pixels within an existing neighboring area.

## Embodiment 3

Embodiment 3 relates to a method for signaling and obtaining application information which is information on whether compensation is applied. Compensation according to the present disclosure may be represented in various forms according to an input image, and to this end, compensation according to the present disclosure may be performed adaptively for an input image. In other words, whether compensation is applied to a specific unit may be determined in header information such as a higher level syntax. In addition, whether compensation is applied may be signaled in a lower unit such as an encoding unit or a CTU unit.

Table 4 represents an example of a method for transmitting whether compensation is used (allowed) in a SPS.

[Table 4]

| seq_parameter_set_rbsp( ) { | Descriptor |
|---|---|
| ... | |
| **sps_illumination_compensation_enabled_flag** | u(1) |
| ... | |
| } | |

The semantics of a sps_illumination_compensation_enabled_flag syntax element may be defined as follows.

1, the value of sps_illumination_compensation_enabled_flag, represents that ic_flag may exist in the inter coding unit syntax of CLVS, and 0, the value of sps_illumination_compensation_enabled_flag, represents that ic_flag does not exist in the inter coding unit syntax of CLVS. When sps_illumination_compensation_enabled_flag does not exist, the value of sps_illumination_compensation_enabled_flag is inferred to be equal to 0.

When it is determined that compensation is used in a higher level syntax, a syntax for whether compensation is applied in the unit of an encoding unit may be signaled in merge_data according to the combination of Tables 5 and 6. The GPM of the present disclosure may be applied when both the values of regular_merge_flag and ciip_flag are 0, and in this case, the compensation application flag (application information) of the present disclosure may be signaled.

[Table 5]

| merge_data( x0, y0, cbWidth, cbHeight, chType ) { | Descriptor |
|---|---|
|   if( CuPredMode[ chType ][ x0 ][ y0 ] == MODE_IBC ) { | |
|     if( MaxNumIbcMergeCand > 1 ) | |
|       **merge_idx[** x0 ][ y0 ] | ae(v) |
|   } else { | |
|     if( **MaxNumSubblockMergeCand** > 0 && cbWidth >= 8 && cbHeight >= 8) | |
|       **merge_subblock_flag[** x0 ][ y0 ] | ae(v) |
|     if( merge_subblock_flag[ x0 ][ y0 ] == 1) { | |
|       if( MaxNumSubblockMergeCand > 1 ) | |
|         **merge_subblock_idx[**x0 ][ y0 ] | ae(v) |
|     } else { | |
|       if( cbWidth < 128 && cbHeight < 128 && <br>         ( (sps_ciip_enabled_flag && cu_skip_flag[ x0][y0] = = 0 && <br>         ( cbWidth * cbHeight ) >= 64) \|\| <br>         ( sps_gpm _enabled_flag && <br>         sh_slice_type = = B && cbWidth >= 8 && cbHeight >= 8 && <br>         cbWidth < (8 * cbHeight ) && cbHeight < ( 8 * cbWidth ) ) ) ) | |
|       **regular_merge_flag[** x0 ][ y0 ] | ae(v) |
|       if( regular_merge_flag[x0 ][ y0 ] = = 1){ | |
|         if( sps_mmvd_enabled_flag ) | |
|           **mmvd_merge_flag[**x0 ][ y0 ] | ae(v) |
|         if( mmvd_merge_flag[ x0 ][ y0 ] == 1 ){ | |

(continued)

| | |
|---|---|
| if( MaxNumMergeCand > 1 ) | |
| **mmvd_cand_flag[** x0 ][ y0 ] | ae(v) |
| **mmvd_distance_idx[**x0 ][ y0 ] | ae(v) |
| **mmvd_direction_idx[**x0 ][ y0 ] | ae(v) |
| } else if( MaxNumMergeCand > 1 ) | |
| **merge_idx[**x0 ][ y0 ] | ae(v) |

[Table 6]

| | |
|---|---|
| } else { | |
| if( sps_ciip_enabled_flag && sps_gpm_enabled_flag && sh_slice_type = = B && cu_skip_flag[ x0][y0] == 0 && cbWidth >= 8 && cbHeight >= 8 && cbWidth < (8 * cbHeight ) && cbHeight <( 8 * cbWidth ) && cbWidth < 128 && cbHeight < 128 ) | |
| **ciip_flag[** x0 ][ y0 ] | ae(v) |
| if( ciip_flag[ x0 ][ y0] && MaxNumMergeCand > 1) | |
| **merge_idx[** x0 ][ y0 ] | ae(v) |
| if( !ciip_flag[ x0 ][ y0 ] ) { | |
| **merge_gpm_partition_idx[** x0 ][ y0 ] | ae(v) |
| **merge_gpm_idx0[**x0 ][ y0 ] | ae(v) |
| if( MaxNumGpmMergeCand > 2 ) | |
| **merge_gpm_idx1[** x0 ][ y0 ] | ae(v) |
| if( sps_illumination_compensation_enabled_flag ) { | |
| **ic_flag** | ae(v) |
| } | |
| } | |
| } | |
| } | |
| } | |
| } | |

1, the value of regular_merge_flag, represents that a regular merge mode is used to generate the inter prediction parameters of a current coding unit. In other words, regular _merge_flag represents whether a merge mode (a regular merge mode) is applied to a current block.

1, the value of mmvd_merge_flag, represents that a MMVD is used to generate the inter prediction parameters of a current coding unit. In other words, mmvd_merge_flag represents whether a MMVD is applied to a current block.

mmvd_cand_flag represents that the first (0) or second (1) candidate within a merge candidate list is used with mvd derived from mmvd_distance_idx and mmvd_direction_idx.

mmvd_distance_idx represents an index used to derive MmvdDistance, and mmvd_direction_idx represents an index used to derive MmvdSign.

merge_subblock_flag represents whether a sub-block merge mode is used to generate sub-block-based inter prediction parameters for a current coding unit. In other words, merge_subblock_flag represents whether a sub-block merge mode (or, an affine merge mode) is applied to a current block.

merge_subblock_idx represents the merge candidate index of a sub-block-based merge candidate list.

ciip_flag represents whether a combined inter-picture merge and intra-picture prediction are applied to a current coding block.

merge_triangle_idx0 represents the first merge candidate index of a triangle-based motion compensation candidate list, and merge_triangle_idx1 represents the second merge candidate index of a triangle-based motion compensation candidate list.

merge_idx represents the merge candidate index of a merge candidate list.

merge_gpm_partition_idx represents a GPM partitioning shape. When merge_gpm_partition_idx does not exist, the value of merge_gpm_partition_idx may be inferred to be equal to 0.

merge_gpm_idx0 represents the first merge candidate index of a geometry partitioning-based motion compensation candidate list, and merge_gpm_idx1 represents the first merge candidate index of a geometry partitioning-based motion compensation candidate list. When merge_gpm_idx0 does not exist, the value of merge_gpm_idx0 may be inferred to be equal to 0, and when merge_gpm_idx1 does not exist, the value of merge_gpm_idx1 may be inferred to be equal to 0.

The semantics of an ic_flag syntax element which is application information may be defined as follows.

ic_flag may represent whether illumination compensation within a current coding unit is used. 1, the value of ic_flag, may represent that illumination compensation is applied to a current coding unit, and 0, the value of ic_flag, may represent that illumination compensation is not applied to a current coding unit. When ic_flag does not exist, the value of ic_flag may be inferred to be equal to 0.

As in the combination of Tables 5 and 6, when one ic_flag is signaled, compensation proposed in the present disclosure may be applied to both $P_0'$ and $P_1'$ which are partitioned by a GPM.

As another embodiment, whether compensation is applied may be separately signaled for each of $P_0'$ and $P_1'$ which are partitioned by a GPM. In this case, application information such as the combination of Tables 7 and 8 may be signaled in merge_data.

[Table 7]

| merge_data( x0, y0, cbWidth, cbHeight, chType ) { | Descriptor |
|---|---|
| if( CuPredMode[ chType ][ x0][ y0 ] = = MODE_IBC ) { | |
| if( MaxNumIbcMergeCand > 1 ) | |
| **merge_idx[** x0 ][ y0 ] | ae(v) |
| } else { | |
| if( MaxNumSubblockMergeCand > 0 && cbWidth >= 8 && cbHeight >= 8) | |
| **merge_subblock_flag[** x0 ][ y0 ] | ae(v) |
| if(merge_subblock_flag[ x0 ][ y0 ] == 1){ | |
| if( MaxNumSubblockMergeCand > 1 ) | |
| **merge_subblock_idx[** x0 ][ y0 ] | ae(v) |
| } else { | |
| if( cbWidth < 128 && cbHeight < 128 && ( (sps_ciip_enabled_flag && cu_skip_flag[ x0 ][ y0 ] == 0 && ( cbWidth * cbHeight ) >= 64) \|\| ( sps_gpm _enabled_flag && sh_slice_type = = B && cbWidth >= 8 && cbHeight >= 8 && cbWidth < ( 8 * cbHeight ) && cbHeight < ( 8 * cbWidth ) ) ) ) | |
| **regular_merge_flag[** x0 ][ y0 ] | ae(v) |
| if( regular_merge_flag[ x0 ][ y0 ] = = 1){ | |
| if( sps_mmvd_enabled_flag ) | |
| **mmvd_merge_flag[** x0 ][ y0 ] | ae(v) |
| if( mmvd_merge_flag[ x0 ][ y0 ] == 1){ | |

(continued)

| | |
|---|---|
| if( MaxNumMergeCand > 1 ) | |
| **mmvd_cand_flag[** x0 ][ y0 ] | ae(v) |
| **mmvd_distance_idx[** x0 ][ y0 ] | ae(v) |
| **mmvd_direction_idx[**x0 ][ y0 ] | ae(v) |
| } else if( MaxNumMergeCand > 1 ) | |
| **merge_idx[** x0 ][ y0 ] | ae(v) |

[Table 8]

| | |
|---|---|
| } else { | |
| if( sps_ciip_enabled_flag && sps_gpm_enabled_flag && sh_slice_type = = B && cu_skip_flag[ x0][y0] == 0 && cbWidth >= 8 && cbHeight >= 8 && cbWidth < (8 * cbHeight ) && cbHeight <( 8 * cbWidth ) && cbWidth < 128 && cbHeight < 128 ) | |
| **ciip_flag[** x0 ][ y0 ] | ae(v) |
| if( ciip_flag[ x0 ][ y0] && MaxNumMergeCand > 1) | |
| **merge_idx[** x0 ][ y0 ] | ae(v) |
| if( !ciip_flag[ x0 ][ y0 ] ) { | |
| **merge_gpm_idx0[**x0 ][ y0]**merge_gpm_idx0[**x0 ][ y0] | ae(v) |
| **merge_gpm_idx0[**x0 ][ y0] | ae(v) |
| if( MaxNumGpmMergeCand > 2 ) | |
| **merge_gpm_idx1[**x0][y0] | ae(v) |
| if( sps_illumination_compensation_enabled_flag ) { | |
| **part0_ic_flag** | ae(v) |
| **part1_ic_flag** | ae(v) |
| } | |
| } | |
| } | |
| } | |
| } | |
| } | |

The semantics of part0_ic_flag and part1_ic_flag syntax elements may be defined as follows.

part0_ic_flag may represent whether the illumination compensation of partition 0 within a current coding unit is used. 1, the value of part0_ic_flag, may represent that illumination compensation is applied to the partition 0 of a current coding unit, and 0, the value of part0_ic_flag, may represent that illumination compensation is not applied to the partition 0 of a current coding unit. When part0_ic_flag does not exist, the value of part0_ic_flag may be inferred to be equal to 0. Partition 0 may be $P_0$' mentioned above. Part0_ic_flag may be referred to as "the first application information".

part1_ic_flag may represent whether the illumination compensation of partition 1 within a current coding unit is used. 1, the value of part1_ic_flag, may represent that illumination compensation is applied to the partition 1 of a current coding unit, and 0, the value of part1_ic_flag, may represent that illumination compensation is not applied to the partition 1 of a current coding unit. When part1_ic_flag does not exist, the value of part1_ic_flag may be inferred to be equal to 0. Partition 1 may be $P_1$' mentioned above. part1_ic_flag may be referred to as "the second application information".

As another embodiment, compensation may be applied only to the block of any one of $P_0$' and $P_1$' partitioned by a GPM. In this case, application information such as the combination of Tables 9 and 10 may be signaled in merge_data.

[Table 9]

| merge_data( x0, y0, cbWidth, cbHeight, chType ) { | **Descriptor** |
|---|---|
| if( CuPredMode[ chType ][ x0 ][ y0 ] == MODE_IBC ) { | |
| if( MaxNumIbcMergeCand > 1 ) | |
| **merge_idx[** x0 ][ y0 ] | ae(v) |
| } else { | |
| if( MaxNumSubblockMergeCand > 0 && cbWidth >= 8 && cbHeight >= 8) | |
| **merge_subblock_flag[** x0 ][ y0 ] | ae(v) |
| if( merge_subblock_flag[ x0 ][ y0 ] == 1){ | |
| if( MaxNumSubblockMergeCand > 1 ) | |
| **merge_subblock_idx[** x0 ][ y0 ] | ae(v) |
| } else { | |
| if( cbWidth < 128 && cbHeight < 128 && ( (sps_ciip_enabled_flag && cu_skip_flag[ x0 ][ y0 ] == 0 && ( cbWidth * cbHeight ) >= 64) \|\| ( sps_gpm _enabled_flag && sh_slice_type == B && cbWidth >= 8 && cbHeight >= 8 && cbWidth < (8 * cbHeight ) && cbHeight < ( 8 * cbWidth ) ) ) ) | |
| **regular_merge_flag[** x0][ y0 ] | ae(v) |
| if( regular_merge_flag[ x0 ][ y0 ] == 1) { | |
| if( sps_mmvd_enabled_flag ) | |
| **mmvd_merge_flag[** x0 ][ y0 ] | ae(v) |
| if( mmvd_merge_flag[ x0 ][ y0 ] == 1){ | |
| if( MaxNumMergeCand > 1 ) | |
| **mmvd_cand_flag[** x0 ][ y0 ] | ae(v) |
| **mmvd_distance_idx[** x0 ][ y0 ] | ae(v) |
| **mmvd_direction_idx[** x0 ][ y0 ] | ae(v) |
| } else if( MaxNumMergeCand > 1 ) | |
| **merge_idx[** x0 ][ y0 ] | ae(v) |

[Table 10]

| } else { | |
|---|---|
| if( sps_ciip_enabled_flag && sps_gpm_enabled_flag && sh_slice_type == B && cu_skip_flag[ x0][y0] == 0 && cbWidth >= 8 && cbHeight >= 8 && cbWidth < (8 * cbHeight ) && cbHeight <( 8 * cbWidth ) && cbWidth < 128 && cbHeight < 128 ) | |
| **ciip_flag[** x0][ y0 ] | ae(v) |

(continued)

| | |
|---|---|
| if( ciip_flag[ x0 ][ y0] && MaxNumMergeCand > 1) | |
| **merge_idx[** x0 ][ y0 ] | ae(v) |
| if( !ciip_flag[ x0 ][ y0 ] ) { | |
| **merge_gpm_partition_idx[** x0 ][ y0 ] | ae(v) |
| **merge_gpm_idx0[** x0 ][ y0 ] | ae(v) |
| if( MaxNumGpmMergeCand > 2 ) | |
| **merge_gpm_idx1[** x0 ][ y0 ] | ae(v) |
| if( sps_illumination_compensation_enabled_flag ) { | |
| **ic_flag** | ae(v) |
| if(ic_flag) | |
| **part0_ic_flag** | ae(v) |
| } | |
| } | |
| } | |
| } | |
| } | |
| } | |

The semantics of ic_flag and part0_ic_flag syntax elements may be defined as follows.

ic_flag may represent whether illumination compensation within a current coding unit is used. 1, the value of ic_flag, may represent that illumination compensation is applied to a current coding unit, and 0, the value of ic_flag, may represent that illumination compensation is not applied to a current coding unit. When ic_flag does not exist, the value of ic_flag may be inferred to be equal to 0. ic_flag may be referred to as "the third application information".

part0_ic_flag may represent whether illumination compensation is applied to partition 0 or partition 1 within a current geometric block. 1, the value of part0_ic_flag, may represent that illumination compensation is applied to partition 0 within a current geometric block, and 0, the value of part0_ic_flag, may represent that illumination compensation is applied to partition 1 within a current geometric block. When part0_ic_flag does not exist, the value of part0_ic_flag may be inferred to be equal to 0. part0_ic_flag may be referred to as "the fourth application information".

As another embodiment, when a partitioning offset value is not 0, the block of any one of $P_0$' and $P_1$' is partitioned to be greater than the other block. In this case, illumination compensation may be restricted to be applied only to a block with the greater size among $P_0$' and $P_1$' . Accordingly, in the combination of Tables 9 and 10, the fourth application information (part0_ic_flag) may not be signaled, through which the number of bits required to signal the fourth application information may be reduced, thereby improving encoding efficiency.

## Image Encoding Method and Image Decoding Method

Hereinafter, an image encoding method and an image decoding method for a GPM proposed in the present disclosure will be described. An image encoding method described below may be performed by an image encoding apparatus 100, and an image decoding method may be performed by an image decoding apparatus 200.

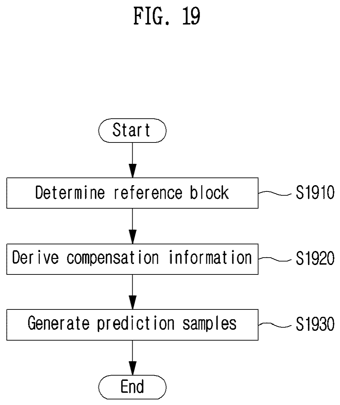

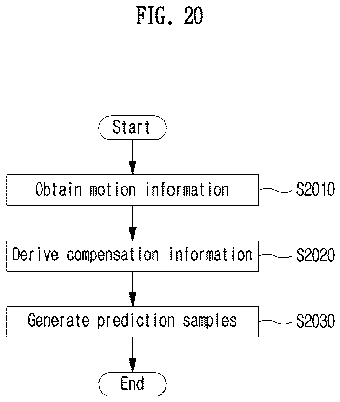

An image encoding method according to an embodiment of the present disclosure is shown in FIG. 19, and an image decoding method according to an embodiment of the present disclosure is shown in FIG. 20.

Referring to FIG. 19, at least one reference block for the prediction of a current block to which a GPM is applied may be determined S1910. A reference block may be $P_0$ and/or $P_1$ described in the present disclosure.

Based on the neighboring area of a reference block and the neighboring area of a current block, compensation information related to compensation of a reference block may be derived S1920. As mentioned above, compensation information is information for compensating for a luma difference between a current block and a reference block, which may include scale information applied to the luma value of the neighboring area of a current block or the luma value of the neighboring area of a reference block and/or offset information applied to a luma value to which scale information is applied among the luma value of the neighboring area of a current block or the luma value of the neighboring area of a reference block.

Prediction samples of a current block (prediction block or final prediction block) may be generated based on compensation information S1930. Information related to whether a GPM is applied, motion information representing a reference block, information related to whether compensation is applied (application information), etc. may be encoded in a bitstream and signaled from an image encoding apparatus 100 to an image decoding apparatus 200.

Referring to FIG. 20, at least one motion information for a current block to which a GPM is applied may be obtained S2010. At least one reference block for prediction of a current block may be determined based on motion information.

Based on the neighboring area of a reference block and the neighboring area of a current block, compensation information related to compensation of a reference block may be derived S2020. As mentioned above, compensation information is information for compensating for a luma difference between a current block and a reference block, which may include scale information applied to the luma value of the neighboring area of a current block or the luma value of the neighboring area of a reference block and/or offset information applied to a luma value to which scale information is applied among the luma value of the neighboring area of a current block or the luma value of the neighboring area of a reference block.

Prediction samples of a current block (prediction block or final prediction block) may be generated based on compensation information S2030.

The neighboring area of a current block and the neighboring area of a reference block may be determined based on the partitioning direction of a GPM. In addition, the neighboring area of a current block and the neighboring area of a reference block may also be determined further based on the partitioning offset of a GPM.

Meanwhile, the neighboring area of a current block may include an adjacent area which is an area adjacent to the top or left of a current block. In this case, a non-adjacent area which is an area not adjacent to the first block may be included in a neighboring area to derive compensation information according to a predetermined condition, and a non-adjacent area which is an area not adjacent to the second block may be included in a neighboring area to derive compensation information. In other words, when a predetermined condition is satisfied, neighboring area extension in which a neighboring area is extended to a non-adjacent area may be performed.

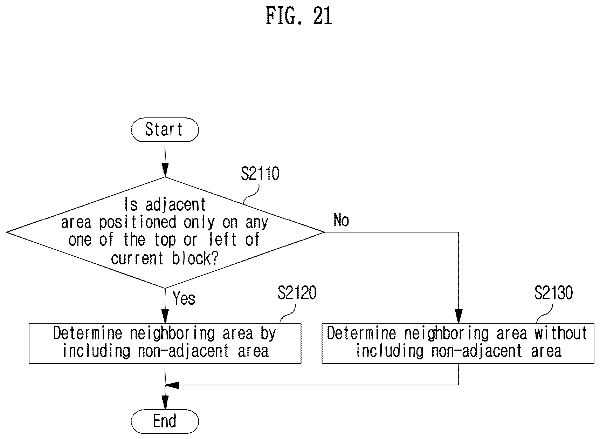

FIGS. 21 to 23 represent various examples of an image encoding method and an image decoding method for determining a neighboring area.

Referring to FIG. 21, it may be determined whether an adjacent area is positioned only on any one of the top or left of a current block S2110. When it is determined that an adjacent area is positioned only on any one of the top or left of a current block, a neighboring area may be determined by including a non-adjacent area positioned in the same direction as an adjacent area S2120. In contrast, when it is determined that an adjacent area is not positioned only on any one of the top or left of a current block, a neighboring area may be determined without including a non-adjacent area S2130.

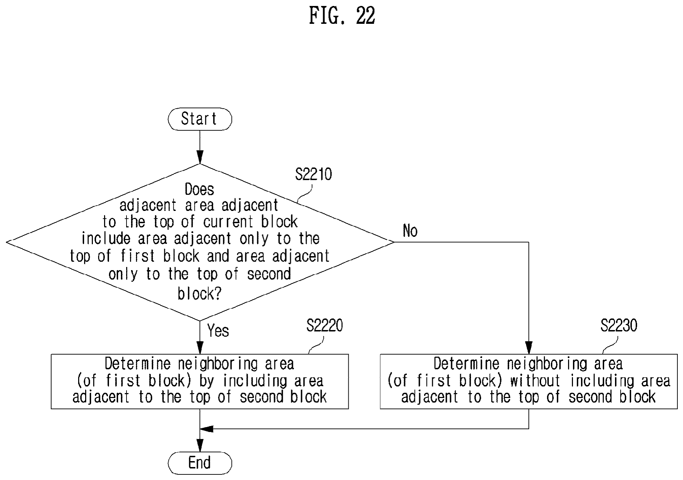

Referring to FIG. 22, it may be determined whether an area adjacent to the top of a current block includes an area adjacent only to the top of the first block (e.g., $P_0'$) and an area adjacent only to the top of the second block (e.g., $P_1'$) S2210. When it is determined that an area adjacent to the top of a current block includes an area adjacent only to the top of the first block and an area adjacent only to the top of the second block, a neighboring area (of the first block) may be determined by including an area adjacent to the top of the second block S2220. In contrast, when it is determined that an area adjacent to the top of a current block includes only an area adjacent only to the top of the first block (i.e., when it is determined that it does not include an area adjacent only to the top of the second block), a top neighboring area (of the first block) may be determined without including an area adjacent to the top of the second block (i.e., only with an area adjacent only to the top of the first block) S2230.

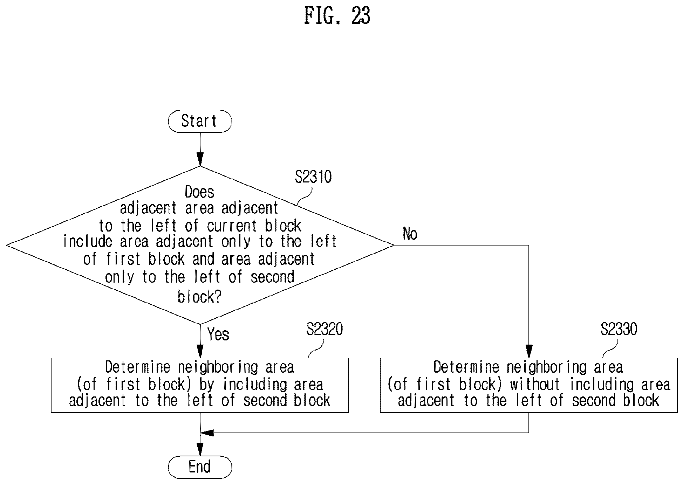

Referring to FIG. 23, it may be determined whether an area adjacent to the left of a current block includes an area adjacent only to the left of the first block (e.g., $P_0'$) and an area adjacent only to the left of the second block (e.g., $P_1'$) S2310. When it is determined that an area adjacent to the left of a current block includes an area adjacent only to the left of the first block and an area adjacent only to the left of the second block, a neighboring area (of the first block) may be determined by including an area adjacent to the left of the second block S2320. In contrast, when it is determined that an area adjacent to the left of a current block includes only an area adjacent only to the left of the first block (i.e., when it is determined that it does not include an area adjacent only to the left of the second block), a left neighboring area (of the first block) may be determined without including an area adjacent to the left of the second block (i.e., only with an area adjacent only to the left of the first block) S2330.

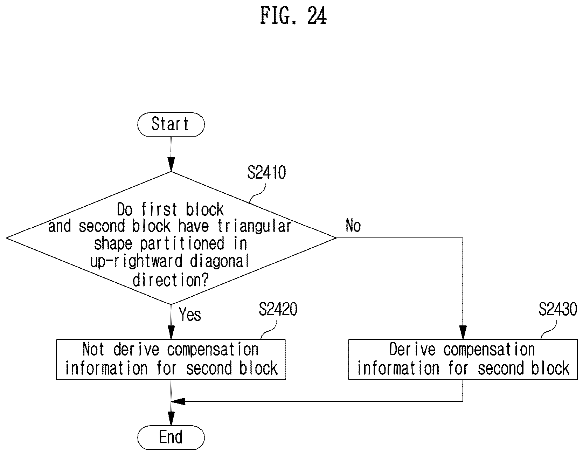

FIG. 24 represents an image encoding method and an image decoding method for determining whether compensation is performed or whether compensation information is derived according to the partitioning direction of a GPM.

Referring to FIG. 24, it may be determined whether the first block (e.g., $P_0'$) and the second block (e.g., $P_1'$) have a triangular shape partitioned in an up-rightward diagonal direction (partitioning direction no. 12 or no. 28, partitioning offset value 0) S2410. When the first block and the second block have a triangular shape partitioned in an up-rightward diagonal direction, the second block may not have a neighboring area for the top and left of a current block. Accordingly, when it is determined that the first block and the second block have a triangular shape partitioned in an up-rightward diagonal direction, compensation information for the second block may not be derived, and illumination compensation for the second block may not be performed S2420. In contrast, when the first block and the second block do not have a triangular shape partitioned in an up-rightward diagonal direction, both the first block and the second block may have a neighboring area for the top or left of a current block. Accordingly, compensation information for the second block as well as the first block may be derived, and illumination compensation for the second block may be performed S2430.

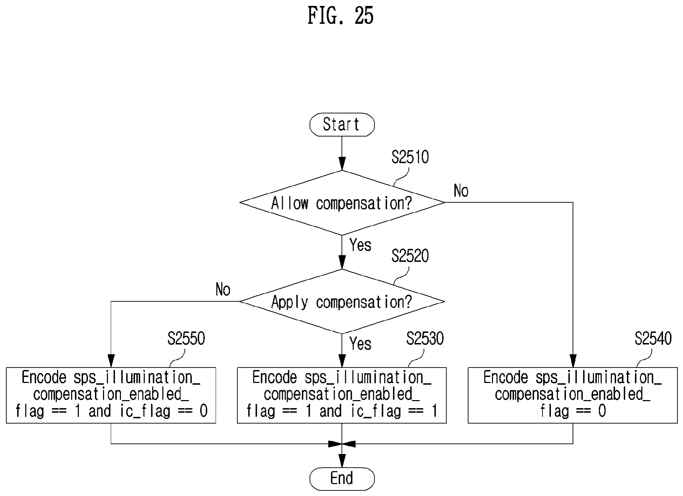

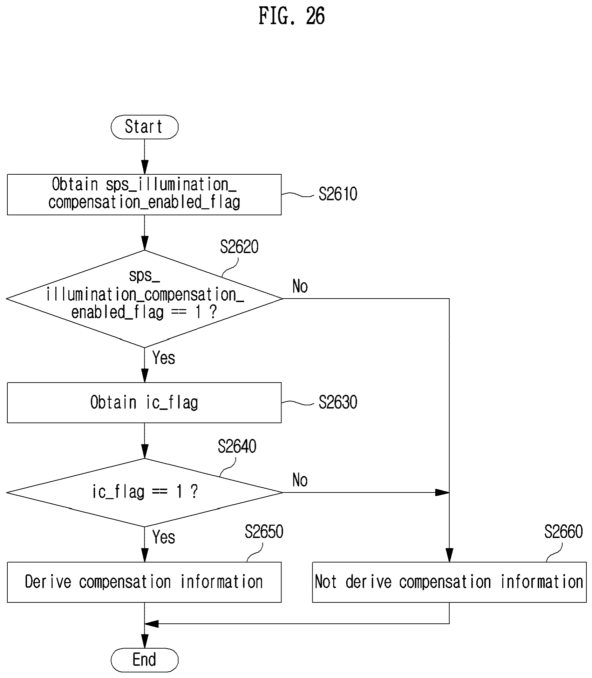

FIG. 25 is a diagram representing an image encoding method for encoding application information, and FIG. 26 is a diagram representing an image decoding method for obtaining application information.

Referring to FIG. 25, whether compensation is allowed may be determined S2510, and when compensation is allowed, whether compensation is applied may be determined S2520. When compensation is applied, the value of sps_illumination_compensation_enabled_flag representing whether compensation is allowed may be encoded as 1, and the value of ic_flag which is application information representing whether compensation is applied may be encoded as 1 S2530. In contrast, when compensation is not allowed, the value of sps_illumination_compensation_enabled_flag may be encoded as 0 and application information may not be encoded S2540. In addition, when compensation is allowed but compensation is not applied to a current block, the value of sps_illumination_compensation_enabled_flag may be encoded as 1 and the value of ic_flag may be encoded as 0 S2550.

Referring to FIG. 26, sps_illumination_compensation_enabled_flag may be obtained from a bitstream S2610, and whether compensation is allowed may be determined based on the value of obtained sps_illumination_compensation_enabled_flag S2620. When compensation is allowed, application information (ic_flag) may be obtained from a bitstream S2630, and whether compensation is applied (i.e., whether compensation information is derived) may be determined based on obtained ic_flag S2640. When it is determined that compensation is applied, compensation information may be derived S2650. In contrast, when it is determined that compensation is not applied or that compensation is not allowed, compensation information may not be derived S2660.

According to embodiments, application information may include the first application information (part0_ic_flag) representing whether compensation is applied to the first block and the second application information (part1_ic_flag) representing whether compensation is applied to the second block. In other words, whether compensation is applied may be determined for each of the first block and the second block, and application information may also be signaled for each of the first block and the second block.

According to embodiments, application information may include the third application information (ic_flag in Table 9) representing whether compensation is applied to a current block and the fourth application information (part0_ic_flag in Table 9) representing a block to which compensation is applied among the first block and the second block. In this case, the fourth application information may be signaled when the third application information represents that compensation is applied to a current block.

According to embodiments, the fourth application information may not be signaled when the size of the first block is greater than the size of the second block. In other words, compensation may be restricted to be applied only to a block with the greater size among the first block and the second block, and in this case, when the size of the first block is greater than the size of the second block, compensation is applied only to the first block. Accordingly, in this case, the fourth application information may not be included in application information.

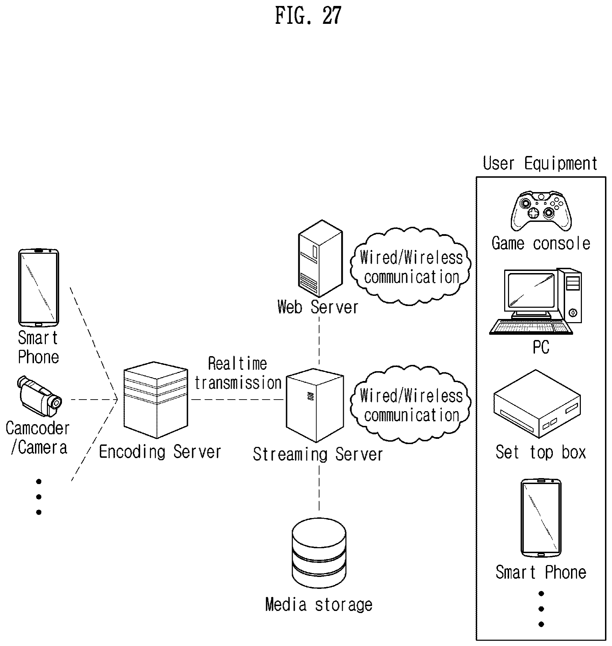

FIG. 27 shows an exemplary diagram of a content streaming system to which an embodiment of the present disclosure may be applied.

As shown in FIG. 27, the content streaming system to which an embodiment of the present disclosure is applied may broadly include an encoding server, a streaming server, a web server, a media storage, a user device, and a multimedia input device.

The encoding server compresses content input from multimedia input devices such as a smartphone, camera, or camcorder into digital data, generating a bitstream and transmitting it to the streaming server. As another example, when multimedia input devices such as a smartphone, camera, or camcorder directly generate a bitstream, the encoding server may be omitted.

The bitstream may be generated by the video encoding method and/or the image encoding apparatus to which an embodiment of the present disclosure is applied, and the streaming server may temporarily store the bitstream during the process of transmitting or receiving the bitstream.

The streaming server may transmit multimedia data to a user device based on a user request through the web server, and the web server may serve as an intermediary that informs user of available service. When a user requests a desired service from the web server, the web server may send the request to the streaming server, and the streaming server may transmit the multimedia data to the user. In this case, the content streaming system may include a separate control server, and in this case, a control server may function to control command/response exchanges between devices within the content streaming system.

The streaming server may receive content from a media storage and/or an encoding server. For example, when receiving content from the encoding server, the content may be received in real time. In this case, to provide a seamless streaming service, the streaming server may store the bitstream for a certain period of time.

Examples of the user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, and digital signage.

Each server within the content streaming system may be operated as a distributed server, in which case the data received by each server may be processed in a distributed manner.

The range of the present disclosure includes software or machine-executable instructions (i.e., an operating system, an application, firmware, a program, etc.) that enable operations according to the methods of various embodiments to be executed on a device or computer, and a non-transitory computer-readable medium in which such software or instructions are stored and executable on a device or computer.

[Industrial Applicability]

The embodiments of the present disclosure may be used for encoding/decoding an image.

**Claims**

1. An image decoding method performed by an image decoding apparatus, comprising:

    obtaining at least one motion information for a current block to which a geometry partitioning mode (GPM) is applied;
    based on a neighboring area of at least one reference block represented by the motion information and a neighboring area of the current block, deriving compensation information related to compensation of the reference block; and
    based on the compensation information, generating prediction samples of the current block.

2. The method of claim 1, wherein the compensation information includes scale information applied to a luma value of the neighboring area of the current block or a luma value of the neighboring area of the reference block.

3. The method of claim 2, wherein the compensation information further includes offset information applied to a luma value to which the scale information is applied among the luma value of the neighboring area of the current block or the luma value of the neighboring area of the reference block.

4. The method of claim 1, wherein the neighboring area of the current block is determined based on a partitioning direction of the GPM.

5. The method of claim 4, wherein the neighboring area of the current block is determined further based on a partitioning offset of the GPM.

6. The method of claim 1, wherein the neighboring area of the current block includes an adjacent area adjacent to a top or a left of the current block.

7. The method of claim 6, wherein based on the adjacent area being positioned only on any one of the top or the left of the current block, the neighboring area of the current block further includes a non-adjacent area that is not adjacent to the current block, and
    wherein the non-adjacent area is positioned in a same direction as the adjacent area among the top or the left of the current block.

8. The method of claim 6, wherein the current block includes a first block and a second block partitioned by the GPM,

    wherein based on an area adjacent to the top of the current block including an area adjacent only to a top of the first block and an area adjacent only to a top of the second block, a neighboring area of the first block further includes the area adjacent only to the top of the second block, and
    wherein based on an area adjacent to the left of the current block including an area adjacent only to a left of the first block and an area adjacent only to a left of the second block, the neighboring area of the first block further includes the area adjacent only to the left of the second block.

9. The method of claim 1, wherein the current block includes a first block and a second block partitioned by the GPM, and wherein based on the first block and the second block having a triangular shape partitioned in an up-rightward diagonal direction, compensation information for the second block is not derived.

10. The method of claim 1, wherein deriving the compensation information is performed based on application information obtained from a bitstream representing that compensation is applied.

11. The method of claim 10, wherein the current block includes a first block and a second block partitioned by the GPM, and

    wherein the application information includes first application information representing whether compensation is applied to the first block and second application information representing whether compensation is applied to the second block.

12. The method of claim 10, wherein the current block includes a first block and a second block partitioned by the GPM,

    wherein the application information includes third application information representing whether compensation is applied to the current block and fourth application information representing a block to which compensation is applied among the first block or the second block, and
    wherein the fourth application information is obtained based on the third application information representing that compensation is applied to the current block.

13. The method of claim 12, wherein based on a size of the first block being greater than a size of the second block, the application information does not include the fourth application information.

14. An image encoding method performed by an image encoding apparatus, comprising:

    determining at least one reference block for prediction of a current block to which a geometry partitioning mode (GPM) is applied;
    based on a neighboring area of the reference block and a neighboring area of the current block, deriving compensation information related to compensation of the reference block; and
    based on the compensation information, generating prediction samples of the current block.

15. A method for transmitting a bitstream generated by an image encoding method, the image encoding method comprising:

    determining at least one reference block for a prediction of a current block to which a geometry partitioning mode (GPM) is applied;
    based on a neighboring area of the reference block and a neighboring area of the current block, deriving compensation information related to compensation of the reference block; and
    based on the compensation information, generating prediction samples of the current block.

FIG.1

# FIG.2

# FIG.3

IMAGE DECODING APPARATUS — 200

BITSTREAM → ENTROPY DECODER (210) → DEQUANTIZER (220) → INVERSE TRANSFORMER (230) → (+) (235) → FILTER (240) → RECONSTRUCTED IMAGE

INTRA PREDICTOR (265)

INTER PREDICTOR (260)

MEMORY / DPB (250)

FIG.4

180

181
PREDICTION MODE
DETERMINER

ORIGINAL PICTURE →

PREDICTIOIN MODE INFORMATION
INFORMATION ON MOTION INFORMATION →

182
MOTION INFORMATION
DERIVER

REFERENCE PICTURE →

PREDICTION SAMPLE →

183
PREDICTION SAMPLE
DERIVER

INTER PREDICTOR

# FIG. 5

```
        ( Start )
            │
            ▼
┌──────────────────────────────────────────────┐
│ Perform prediction (determine inter prediction mode, │──── S510
│ derive motion information, generate prediction samples) │
└──────────────────────────────────────────────┘
            │
            ▼
┌──────────────────────────────────────────────┐
│   Derive residual samples based on prediction samples   │──── S520
└──────────────────────────────────────────────┘
            │
            ▼
┌──────────────────────────────────────────────┐
│    Encode image information including prediction    │──── S530
│       information and residual information       │
└──────────────────────────────────────────────┘
            │
            ▼
         ( End )
```

FIG. 6

# FIG. 7

```
                    ( Start )
                        │
                        ▼
┌─────────────────────────────────────────┐
│  Determine prediction mode for current   │ ── S710
│  block based on received prediction      │
│  information                             │
└─────────────────────────────────────────┘
                        │
                        ▼
┌─────────────────────────────────────────┐
│         Derive motion information        │ ── S720
└─────────────────────────────────────────┘
                        │
                        ▼
┌─────────────────────────────────────────┐
│ Perform prediction (generate prediction  │ ── S730
│              samples)                    │
└─────────────────────────────────────────┘
                        │
                        ▼
┌─────────────────────────────────────────┐
│       Derive residual samples based on   │ ── S740
│            residual information          │
└─────────────────────────────────────────┘
                        │
                        ▼
┌─────────────────────────────────────────┐
│   Reconstruct picture based on           │ ── S750
│   prediction samples and residual        │
│   samples                                │
└─────────────────────────────────────────┘
                        │
                        ▼
                    ( End )
```

# FIG. 8

```
        ( Start )
            │
            ▼
┌─────────────────────────────────┐
│ Determine inter prediction mode │──S810
└─────────────────────────────────┘
            │
            ▼
┌─────────────────────────────────┐
│    Derive motion information     │──S820
└─────────────────────────────────┘
            │
            ▼
┌─────────────────────────────────────┐
│ Perform prediction based on motion   │──S830
│ information (generate prediction sample) │
└─────────────────────────────────────┘
            │
            ▼
         ( End )
```

FIG. 9

FIG. 10

| Merge Index | L0 MV | L1 MV |
|:-----------:|:-----:|:-----:|
| 0 | X | |
| 1 | | X |
| 2 | X | |
| 3 | | X |
| 4 | X | |

FIG. 11

FIG. 12

FIG. 13

FIG. 14

FIG. 15

(a)

(b)

FIG. 16

(a)

(b)

FIG. 17

(a)

(b)

FIG. 18

(a)

(b)

(c)

## FIG. 19

```
        ( Start )
            |
            v
+---------------------------+
|  Determine reference block|——— S1910
+---------------------------+
            |
            v
+-----------------------------------+
| Derive compensation information   |——— S1920
+-----------------------------------+
            |
            v
+-----------------------------+
| Generate prediction samples |——— S1930
+-----------------------------+
            |
            v
        ( End )
```

FIG. 20

```
        ( Start )
            │
            ▼
┌──────────────────────────┐
│ Obtain motion information │ ──── S2010
└──────────────────────────┘
            │
            ▼
┌──────────────────────────────┐
│ Derive compensation information │ ──── S2020
└──────────────────────────────┘
            │
            ▼
┌──────────────────────────┐
│ Generate prediction samples │ ──── S2030
└──────────────────────────┘
            │
            ▼
         ( End )
```

FIG. 21

```
                        ┌─────────┐
                        │  Start  │
                        └─────────┘
                             │
                             │           S2110
                             ▼
                    ◇─────────────────◇
                   ╱   Is adjacent      ╲
              ╱   area positioned only on any   ╲      No
             ◇    one of the top or left of      ◇─────────────────┐
              ╲       current block?            ╱                   │
                   ╲                          ╱                     │
                    ◇─────────────────◇                            │
                             │                                     │
                             │ Yes       S2120              S2130  │
                             ▼                                     ▼
        ┌──────────────────────────────────┐   ┌──────────────────────────────────┐
        │ Determine neighboring area by    │   │ Determine neighboring area without│
        │ including non-adjacent area      │   │ including non-adjacent area       │
        └──────────────────────────────────┘   └──────────────────────────────────┘
                             │                                     │
                             │◄────────────────────────────────────┘
                             ▼
                        ┌─────────┐
                        │   End   │
                        └─────────┘
```

FIG. 22

```
                        ( Start )
                            │
                            ▼
                         ╱ Does ╲                    S2210
                      ╱ adjacent area adjacent ╲
                   ╱  to the top of current block  ╲
                ╱   include area adjacent only to the   ╲      No
               ╲  top of first block and area adjacent  ╱────────────┐
                  ╲  only to the top of second       ╱               │
                     ╲      block?      ╱                             │
                            │                                        │
                          Yes          S2220                         │    S2230
                            ▼                                        ▼
        ┌───────────────────────────────────┐      ┌───────────────────────────────────┐
        │  Determine neighboring area       │      │  Determine neighboring area       │
        │  (of first block) by including area│      │  (of first block) without including area│
        │  adjacent to the top of second block│    │  adjacent to the top of second block│
        └───────────────────────────────────┘      └───────────────────────────────────┘
                            │                                        │
                            ◄────────────────────────────────────────┘
                            ▼
                         ( End )
```

FIG. 23

# FIG. 24

```
                    ┌─────────┐
                    │  Start  │
                    └─────────┘
                         │
                         ▼                    S2410
                  ╱─────────────╲
             ╱    Do first block    ╲
        ╱  and second block have triangular  ╲      No
       ⟨      shape partitioned in            ⟩──────────────┐
        ╲     up-rightward diagonal          ╱               │
             ╲     direction?        ╱                       │
                  ╲─────────────╱                            │
                      │ Yes      S2420                       │ S2430
                      ▼                                      ▼
          ┌──────────────────────────┐      ┌──────────────────────────┐
          │   Not derive compensation │      │    Derive compensation    │
          │ information for second block│    │ information for second block│
          └──────────────────────────┘      └──────────────────────────┘
                      │                                      │
                      ▼◄─────────────────────────────────────┘
                ┌─────────┐
                │   End   │
                └─────────┘
```

# FIG. 25

Start

S2510

Allow compensation?  →  No

Yes

S2520

No  ←  Apply compensation?

S2550

Encode sps_illumination_
compensation_enabled_
flag == 1 and ic_flag == 0

Yes  S2530

Encode sps_illumination_
compensation_enabled_
flag == 1 and ic_flag == 1

S2540

Encode sps_illumination_
compensation_enabled_
flag == 0

End

FIG. 26

```
                    ┌──────────┐
                    │  Start   │
                    └────┬─────┘
                         │
                         ▼
          ┌─────────────────────────────┐
          │ Obtain sps_illumination_    │──── S2610
          │ compensation_enabled_flag   │
          └──────────────┬──────────────┘
                         │
                         ▼            S2620
                    ╱─────────╲
                   ╱   sps_     ╲
            ╱─ illumination_compensation_ ─╲  No
            ╲     enabled_flag == 1 ?      ╱─────────────┐
                   ╲           ╱                         │
                    ╲─────────╱                          │
                         │ Yes                           │
                         ▼                               │
          ┌─────────────────────────────┐               │
          │       Obtain ic_flag        │──── S2630      │
          └──────────────┬──────────────┘               │
                         │             S2640             │
                         ▼                               │
                    ╱─────────╲       No                 │
                   ╱ ic_flag == 1 ? ╲──────────────┐     │
                    ╲─────────╱                    │     │
                         │ Yes      S2650          │     │  S2660
                         ▼                         ▼     ▼
          ┌──────────────────────────┐   ┌────────────────────────────────┐
          │ Derive compensation      │   │ Not derive compensation        │
          │ information              │   │ information                    │
          └──────────────┬───────────┘   └───────────────┬────────────────┘
                         │◄──────────────────────────────┘
                         ▼
                    ┌──────────┐
                    │   End    │
                    └──────────┘
```

FIG. 27

## INTERNATIONAL SEARCH REPORT

| International application No. |
|---|
| **PCT/KR2024/003245** |

| **A.** | **CLASSIFICATION OF SUBJECT MATTER** |
|---|---|
| | **H04N 19/573**(2014.01)i; **H04N 19/119**(2014.01)i; **H04N 19/105**(2014.01)i; **H04N 19/132**(2014.01)i |

According to International Patent Classification (IPC) or to both national classification and IPC

| **B.** | **FIELDS SEARCHED** |
|---|---|

Minimum documentation searched (classification system followed by classification symbols)

H04N 19/573(2014.01); H04N 19/103(2014.01); H04N 19/105(2014.01); H04N 19/107(2014.01); H04N 19/117(2014.01); H04N 19/119(2014.01); H04N 19/176(2014.01); H04N 19/537(2014.01); H04N 19/57(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 기하학적 분할 모드(Geometry Partitioning Mode, GPM), 참조 블록(reference block), 보상 정보(compensation information), 스케일(scale), 오프셋(offset), 분할 방향(partition direction)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | KR 10-2023-0034191 A (ELECTRONICS AND TELECOMMUNICATIONS RESEARCH INSTITUTE) 09 March 2023 (2023-03-09) See paragraphs [0457], [1043] and [1491]; and claims 1-2. | 1-15 |
| Y | KR 10-2022-0050838 A (INTERDIGITAL VC HOLDINGS, INC.) 25 April 2022 (2022-04-25) See paragraphs [0043], [0065], [0071] and [0094]; and claims 18 and 21-22. | 1-15 |
| Y | US 2021-0076029 A1 (QUALCOMM INCORPORATED) 11 March 2021 (2021-03-11) See paragraphs [0093]-[0094] and [0103]. | 10-13 |
| A | KR 10-1555617 B1 (THOMSON LICENSING) 24 September 2015 (2015-09-24) See claim 1. | 1-15 |
| A | KR 10-2022-0143843 A (BEIJING BYTEDANCE NETWORK TECHNOLOGY CO., LTD. et al.) 25 October 2022 (2022-10-25) See paragraphs [0016]-[0018]. | 1-15 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 June 2024** | **14 June 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/003245**

| Patent document cited in search report | | | Publication date (day/month/year) | Patent family member(s) | | | Publication date (day/month/year) |
|---|---|---|---|---|---|---|---|
| KR | 10-2023-0034191 | A | 09 March 2023 | WO | 2023-033603 | A1 | 09 March 2023 |
| KR | 10-2022-0050838 | A | 25 April 2022 | CN | 114128271 | A | 01 March 2022 |
| | | | | EP | 3984218 | A1 | 20 April 2022 |
| | | | | US | 2022-0303526 | A1 | 22 September 2022 |
| | | | | WO | 2020-251930 | A1 | 17 December 2020 |
| US | 2021-0076029 | A1 | 11 March 2021 | CN | 111567043 | A | 21 August 2020 |
| | | | | CN | 111567043 | B | 28 March 2023 |
| | | | | EP | 3738310 | A1 | 18 November 2020 |
| | | | | EP | 3738310 | A4 | 11 August 2021 |
| | | | | US | 11388398 | B2 | 12 July 2022 |
| | | | | WO | 2019-136657 | A1 | 18 July 2019 |
| KR | 10-1555617 | B1 | 24 September 2015 | CN | 101822056 | A | 01 September 2010 |
| | | | | CN | 101822056 | B | 02 January 2013 |
| | | | | EP | 2208350 | A2 | 21 July 2010 |
| | | | | JP | 2016-054530 | A | 14 April 2016 |
| | | | | JP | 6318136 | B2 | 25 April 2018 |
| | | | | KR | 10-1555327 | B1 | 23 September 2015 |
| | | | | US | 8681855 | B2 | 25 March 2014 |
| | | | | WO | 2009-051668 | A2 | 23 April 2009 |
| | | | | WO | 2009-051668 | A3 | 04 June 2009 |
| KR | 10-2022-0143843 | A | 25 October 2022 | CN | 115398913 | A | 25 November 2022 |
| | | | | JP | 2024-003022 | A | 11 January 2024 |
| | | | | JP | 7415027 | B2 | 16 January 2024 |
| | | | | US | 11968402 | B2 | 23 April 2024 |
| | | | | US | 2023-0046629 | A1 | 16 February 2023 |
| | | | | WO | 2021-170096 | A1 | 02 September 2021 |

Form PCT/ISA/210 (patent family annex) (July 2022)